(19) Europäisches Patentamt
European Patent Office
Office européen des brevets

(11) **EP 1 975 444 B1**

(12) **EUROPEAN PATENT SPECIFICATION**

(45) Date of publication and mention
of the grant of the patent:
**20.06.2018  Bulletin 2018/25**

(51) Int Cl.:
**F16D 48/06** *(2006.01)*

(21) Application number: **08003306.1**

(22) Date of filing: **22.02.2008**

(54) **Vehicle**

Fahrzeug

Véhicule

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **23.02.2007  JP 2007043645
06.09.2007  JP 2007231133**

(43) Date of publication of application:
**01.10.2008  Bulletin 2008/40**

(73) Proprietor: **Yamaha Hatsudoki Kabushiki Kaisha
Shizuoka-ken Shizuoka 438-8501 (JP)**

(72) Inventor: **Minami, Kengo
Iwata-shi
Shizuoka-ken 438-8501 (JP)**

(74) Representative: **Grünecker Patent- und
Rechtsanwälte
PartG mbB
Leopoldstraße 4
80802 München (DE)**

(56) References cited:
**EP-A1- 1 688 635        EP-A2- 1 617 058
WO-A1-03/019029        DE-A1-102005 030 191
DE-A1-102005 030 534        DE-A1-102005 057 844**

**EP 1 975 444 B1**

**Description**

The present invention relates to a vehicle, and in particular to a technology for controlling the degree of engagement of a clutch by actuating an actuator. More particularly, the invention relates to a clutch controller, a straddle-type vehicle, and a method for controlling a clutch.

Conventional semi-automatic vehicles, which actuate an actuator to engage or disengage a clutch, use a technology for controlling relative positions of a drive-side member and a driven-side member of the clutch (the degree of engagement of the clutch) based on a difference in rotational speed between these members during engaging operation of the clutch (for example, Patent Document 1).

Patent Document 1: JP-A-2001-146930

The technology is designed to control the degree of engagement between the drive-side member and the driven-side member based on the difference in rotational speed therebetween. This, however, can prevent appropriate torque from being constantly transmitted via the clutch, and thus can impair riding comfort during engaging operation of the clutch. For example, sharply increasing torque can be transmitted from the drive-side member to the driven-side member, which possibly impairs riding comfort. An additional technology is also proposed, in which a half-clutch state is maintained until the difference in rotational speed is almost zero. However, such control results in excessively low torque being continuously transmitted via the clutch for a long time period. Thus, the rider can perceive that the vehicle decelerates excessively.

The prior art document DE10 2005 030 534 A1 discloses a device and a method for controlling an automatic clutch of a vehicle. Said prior art method refers to the determination of target clutch torque according to a first map in consideration of engine speed. Moreover, the target clutch torque can be changed, wherein the value of said target clutch torque is changed in case it is determined that the actual torque of the clutch deviates from the target clutch torque.

The present invention is made in view of the foregoing problems, and an object of the invention is to provide a vehicle with a clutch controller, in particular a straddle-type vehicle, and a method for controlling a clutch which allow an appropriate amount of torque to be transmitted via the clutch and which, preferably, prevent the clutch from spending too much time on its engaging operation.

According to the present invention this object is solved by a vehicle having the features of independent claim 1. Preferred embodiments are laid down in the dependent claims. Moreover, this object is solved by Method for controlling a clutch in a torque transmitting path of a vehicle having the features of independent claim 9.

According to the apparatus aspect it is provided a vehicle having an engine and a clutch provided in a torque transmission path, said clutch controller comprising: an actuator for changing the degree of engagement between a drive-side member and a driven-side member of the clutch; an actual torque obtaining section for obtaining torque transmitted from the drive-side member to a downstream mechanism of the torque transmission path as actual transmission torque, the downstream mechanism including the driven-side member; a target torque obtaining section for obtaining torque that is supposed to be transmitted from the drive-side member to the downstream mechanism as target transmission torque; and a control unit, said control unit being configured to control the degree of engagement of the clutch by actuating the actuator based on a difference between the actual transmission torque and the target transmission torque.

The target torque obtaining section includes a determining section configured to determine whether or not a difference in rotational speed between the drive-side member and the driven-side member is reduced at an appropriate rate, and depending on the determination result, to correct the target transmission torque.

Further, preferably the actual torque obtaining section is configured to calculate the actual transmission torque based on the engine torque and torque produced due to inertia of a mechanism upstream of the drive-side member in the torque transmission path.

Still further, preferably the target torque obtaining section is configured to set the target transmission torque at torque estimated to be transmitted from the drive-side member to the downstream mechanism after completion of engagement of the clutch, and depending on the determination result from the determining section, to correct the set target transmission torque.

According to another preferred embodiment, the vehicle further comprises an engine torque obtaining section for obtaining torque outputted from an engine as engine torque, wherein the target torque obtaining section is configured to correct the target transmission torque to increase a difference between the corrected target transmission torque and the engine torque.

Preferably, the determining section is configured to determine whether or not the difference in rotational speed between the drive-side member and the driven-side member is reduced at an appropriate rate based on the difference between the target transmission torque and the engine torque.

Further, preferably the determining section is configured to compare the difference between the target transmission torque and the engine torque with a predetermined value, and based on the comparison result, to determine whether or not the difference in rotational speed between the drive-side member and the driven-side member is reduced

2

at an appropriate rate.

According to a further preferred embodiment, the vehicle further comprises an engine control section for controlling the engine in order to decrease the engine torque during engaging operation of the clutch.

Preferably, the control unit is configured to set the target transmission torque, while actuating the clutch controller, such that the actual transmission torque approximates the target transmission torque.

For the method aspect, it is provided a method for controlling a clutch in a torque transmitting path of a vehicle, comprising the steps of: obtaining torque transmitted from a drive-side member of the clutch to a downstream mechanism in a torque transmission path as actual transmission torque, the downstream mechanism including a driven-side member of the clutch; obtaining torque that is supposed to be transmitted from the drive-side member to the downstream mechanism as target transmission torque; and controlling the degree of engagement of the clutch by actuating an actuator based on a difference between the actual transmission torque and the target transmission torque.

The method comprises the steps of determining whether or not a difference in rotational speed between the drive-side member and the driven-side member is reduced at an appropriate rate, and correcting the target transmission torque depending on the determination result from the determining step.

In the following, the present invention is explained in greater detail with respect to several embodiments thereof in conjunction with the accompanying drawings, wherein:

FIG. 1              is a side view of a motorcycle provided with a clutch controller according to an embodiment of the present teaching,

FIG. 2              is a schematic view of a mechanism provided on a torque transmission path of the motorcycle,

FIG. 3              is a block diagram illustrating a configuration of the clutch controller,

FIGs. 4(a) to 4(d)     are time charts for describing the overview of the control by means of the control unit 10. FIG. 4(a) shows an example of changes in degree of engagement of a clutch at the time of gear shifting. FIG. 4(b) shows an example of changes in actual transmission torque. FIG. 4(c) shows an example of changes in target transmission torque. FIG. 4(d) shows an example of changes in engine speed.

FIG. 5              is a block diagram illustrating functions of a control unit provided in the clutch controller,

FIG. 6              is a graph showing an example of the relationship between a torque deviation as a difference between target transmission torque and actual transmission torque, and a command actuation amount obtained from an actuation amount relational expression,

FIG. 7              is a graph showing another example of the relationship between a torque deviation or a difference between target transmission torque and actual transmission torque, and a command actuation amount obtained from an actuation amount relational expression,

FIG. 8              is a flowchart showing the processing steps executed by the control unit,

FIGs. 9(a) to 9(d)     are time charts for respectively describing changes in degree of engagement of the clutch, target transmission torque, actual transmission torque, EG torque, and engine speed,

FIGs. 10(a) to 10(d)    are time charts for respectively describing changes in degree of engagement of the clutch, target transmission torque, actual transmission torque, EG torque, and engine speed,

FIGs. 11(a) to 11(d)    are time charts for respectively describing changes in degree of engagement of the clutch, target transmission torque, actual transmission torque, EG torque, and engine speed, and

FIGs. 12(a) to 12(d)    are time charts for respectively describing changes in degree of engagement of the clutch, target transmission torque, actual transmission torque, EG torque, and engine speed,

Description of Reference Numerals:

1: motorcycle
2: front wheel
3: rear wheel
4: front fork
5: handlebars
10: clutch controller
11: control unit
11a:actual torque obtaining section
11b:EG torque obtaining section (engine torque obtaining section)
11d:target torque obtaining section
11h:correction processing section
11i:appropriateness determining section (determining section)
11L:gear shifting engine control section (engine control section)
12: storage unit
13: clutch actuator drive circuit
14: clutch actuator
15: shift actuator drive circuit
16: shift actuator
17: accelerator operation detector
18: engine speed detector
19: vehicle speed detector
21: gear position detector
22: clutch position detector
23a, 23b:clutch rotational speed detector
24: spark plug drive circuit
9a:shift-up switch
9b:shift-down switch
30: engine
31: cylinder
31a:spark plug
32: piston
33: intake port
34: crankshaft
35: intake pipe
36: primary speed reducing mechanism
37: throttle body
40: clutch
41: drive-side member
42: driven-side member
43: push rod
50: secondary speed reducing mechanism
51: gearbox
52: main shaft
53a, 54a, 53b, 54b:shift gear
55: countershaft
56: gearshift mechanism
57: transmission mechanism

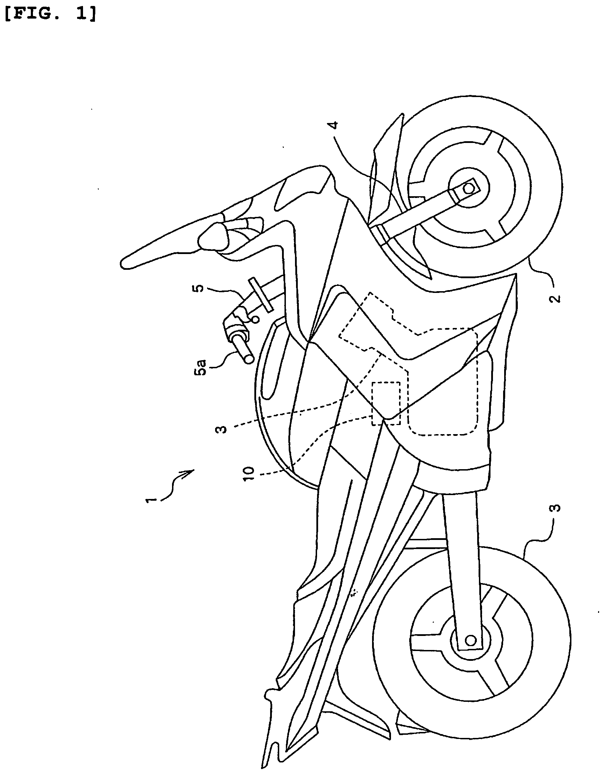

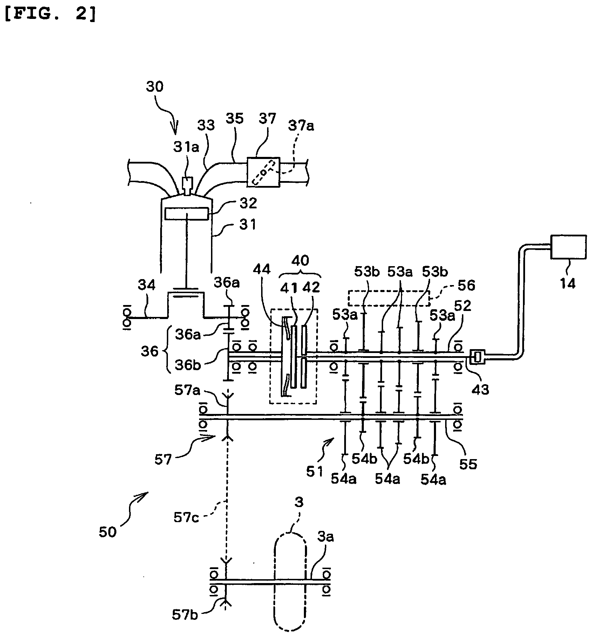

An embodiment of the present teaching is described below with reference to the drawings. FIG. 1 is a side view of a motorcycle 1 provided with a clutch controller 10 as an example of the embodiment of the teaching. FIG. 2 is a schematic view of a mechanism located on a torque transmission path of the motorcycle 1.

As shown in FIG. 1 or FIG. 2, the motorcycle 1 is provided not only with the clutch controller 10, but also with an engine 30, a primary speed reducing mechanism 36, a clutch 40, a secondary speed reducing mechanism 50, a front wheel 2, and a rear wheel 3.

As shown in FIG. 1, the front wheel 2 is located at a front part of a vehicle body, and supported by lower ends of a front fork 4. Handlebars 5 are connected to the top of the front fork 4. An acceleration grip 5a to be gripped by a rider is mounted to the right end of the handlebars 5. The acceleration grip 5a is connected to a throttle valve 37a provided in a throttle body 37 (see FIG. 2). The throttle valve 37a is opened according to rider's accelerator operation, and a certain amount of air, which depends on the opening of the throttle valve 37a, is delivered to the engine 30. The motorcycle 1 may be provided with an electronically-controlled throttle device. In this case, a sensor for detecting the rider's accelerator operation and an actuator for opening the throttle valve 37a according to the accelerator operation detected by the sensor are provided.

As shown in FIG. 2, the engine 30 has a cylinder 31, a piston 32, an intake port 33, and a crankshaft 34. The throttle body 37 is connected to the intake port 33 via an intake pipe 35.

The throttle valve 37a is placed within an intake passage of the throttle body 37. Mixture of air, which flows through the intake passage of the throttle body 37, and fuel, which is supplied from a fuel supplier (not shown, for example, injector or carburetor), is delivered to an interior of the cylinder 31. A spark plug 31a faces the interior of the cylinder 31 in order to ignite the air-fuel mixture within the cylinder 31. Burning the air-fuel mixture causes the piston 32 to reciprocate within the cylinder 31. The reciprocating motion of the piston 32 is converted into rotating motion by the crankshaft 34, thereby outputting torque from the engine 30.

The primary speed reducing mechanism 36 includes: a drive-side primary reduction gear 36a, which operates in conjunction with the crankshaft 34; and a driven-side primary reduction gear 36b, which meshes with the primary reduction gear 36a. The primary speed reducing mechanism 36 decelerates the rotation of the crankshaft 34 at a predetermined gear ratio.

The clutch 40 transmits torque outputted from the engine 30 to the downstream side of the clutch 40 or interrupts transmission of the torque. The clutch 40 is a friction clutch, for example, and is provided with a drive-side member 41 and a driven-side member 42. The drive-side member 41 includes a friction disk, for example, and rotates together with the primary reduction gear 36b. The driven-side member 42 includes a clutch disk, for example, and rotates together with a main shaft 52. The drive-side member 41 and the driven-side member 42 are pressed against each other by elastic force of a clutch spring 44 at the time of engaging the clutch 40, so that the torque of the engine 30 is transmitted from the drive-side member 41 to the driven-side member 42. In turn, at the time of disengaging the clutch 40, the driven-side member 42 and the drive-side member 41 are moved away from each other, so that torque transmission from the drive-side member 41 is interrupted. The clutch controller 10 is provided with a clutch actuator 14 as will be discussed later. The clutch actuator 14 performs engaging operation of the clutch 40 (switching from the disengaged state to the engaged state) and disengaging operation thereof (switching from the engaged state to the disengaged state).

The secondary speed reducing mechanism 50 is designed to decelerate the rotation of the main shaft 52 and transmit the decelerated rotation to an axle 3a of the rear wheel 3. In this example, the secondary speed reducing mechanism 50 is provided with a gearbox 51 and a transmission mechanism 57. The gearbox 51 is a mechanism to change reduction ratios, such as a constant-mesh gearbox and a selective-sliding gearbox.

The gearbox 51 has on the main shaft 52 plural shift gears 53a (for example, first-speed gear, second-speed gear, third/fourth-speed gear) and shift gears 53b (for example, fifth-speed gear and six-speed gear). Also, the gearbox 51 has on the countershaft 55 plural shift gears 54a (for example, first-speed gear, second-speed gear, third/fourth-speed gear) and shift gears 54b (for example, fifth-speed gear and six-speed gear). The shift gears 53a are spline-connected to the main shaft 52 and operates in conjunction with the main shaft 52. The shift gears 54a are provided such that they run idle to the countershaft 55, and mesh with the shift gears 53a, respectively. The shift gears 53b are provided such that they run idle to the main shaft 52. The shift gears 54b mesh with the corresponding shift gears 53b respectively, while being spline-connected to the countershaft 55 to operate in conjunction with the countershaft 55.

The gearbox 51 is also provided with a gearshift mechanism 56. The gearshift mechanism 56 includes a shift fork and a shift drum, for example, and selectively moves the shift gears 53a, 53b, 54a, 54b in the axial direction of the main shaft 52 or the countershaft 55. Then, the gearshift mechanism 56 causes the shift gears 53b, 54a, which are provided to turn free to the corresponding shafts, to connect with the adjacent shift gears 53a, 54b, which operate in conjunction with the corresponding shafts. This changes the pairs of shift gears to transmit torque from the main shaft 52 to the countershaft 55. The gearshift mechanism 56 is actuated by power inputted from a shift actuator 16 to be discussed later.

The transmission mechanism 57 is designed to decelerate the rotation of the countershaft 55 and transmit the decelerated rotation to the axle 3a of the rear wheel 3. In this example, the transmission mechanism 57 includes: a drive-side member 57a (for example, drive-side sprocket), which operates in conjunction with the countershaft 55; a driven-side member 57b (for example, driven-side sprocket), which operates in conjunction with the axle 3a; and a transmission member 57c (for example, chain), which transmits torque from the drive-side member 57a to the driven-side member 57b.

Torque outputted from the engine 30 is transmitted to the drive-side member 41 of the clutch 40 via the primary speed reducing mechanism 36. The torque transmitted to the drive-side member 41 is transmitted to the axle 3a of the rear wheel 3 via the driven-side member 42, the gearbox 51, and the transmission mechanism 57, in the case that the clutch 40 is engaged or the drive-side member 41 and the driven-side member 42 contact each other, that is, the clutch 40 is in a half-clutch state.

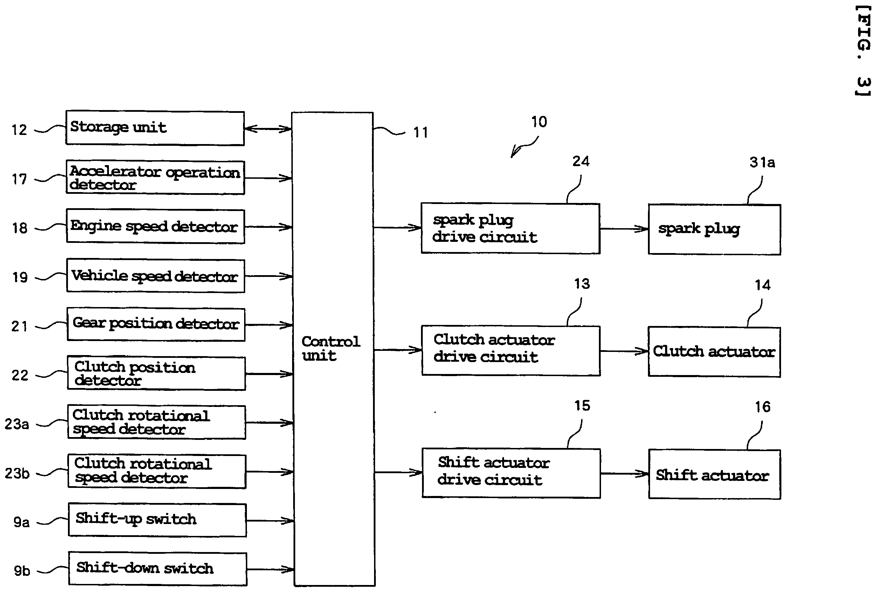

Now, a configuration of the clutch controller 10 is described. The motorcycle 1 is a semi-automatic vehicle which changes the shift gears of the gearbox 51 without the need for the rider to operate the clutch. The clutch controller 10 controls the degree of engagement of the clutch 40 (relative positions of the drive-side member 41 and the driven-side member 42) during engaging operation thereof, and changes the shift gears 53a, 53b, 54a, 54b. FIG. 3 is a block diagram illustrating a configuration of the clutch controller 10. As shown in FIG. 3, the clutch controller 10 is provided with a control unit 11, a storage unit 12, a clutch actuator drive circuit 13, a clutch actuator 14, a shift actuator drive circuit 15, a shift actuator 16, a spark plug drive circuit 24, an accelerator operation detector 17, an engine speed detector 18, a vehicle speed detector 19, a gear position detector 21, a clutch position detector 22, and clutch rotational speed detectors 23a, 23b. The control unit 11 is connected to a shift-up switch 9a and a shift-down switch 9b.

The control unit 11 includes a central processing unit (CPU). In accordance with programs stored in the storage unit 12, the control unit 11 changes the shift gears 53a, 53b, 54a, 54b of the gearbox 51 according to the rider's gearshift operation (in this example, switching the shift-up switch 9a or the shift-down switch 9b ON), while controlling the degree of engagement of the clutch 40. The processing executed by the control unit 11 will be discussed in detail later.

The storage unit 12 includes a nonvolatile memory and a volatile memory. The storage unit 12 stores in advance programs executed by the control unit 11 and tables or expressions used for the processing in the control unit 11. These tables and expressions will be discussed in details later.

The clutch actuator drive circuit 13 supplies drive voltage or drive current the clutch actuator 14 in accordance with a control signal inputted from the control unit 11. The clutch actuator 14 includes, for example, a motor and a power transmission mechanism (such as hydraulic path and wire), and is driven by receiving the electric power supplied by the clutch actuator drive circuit 13. In this example, the clutch actuator 14 presses a push rod 43 or releases the pressed push rod 43. When the push rod 43 is pressed by the clutch actuator 14, it moves the drive-side member 41 and the driven-side member 42 away from each other against the elastic force of the clutch spring 44, so that the clutch 40 is disengaged. In contrast, when the pressed push rod 43 is released by the clutch actuator 14, it returns to its original position (the position at the time when the clutch 40 is engaged) using the elastic force of the clutch spring 44. Thus, the drive-side member 41 and the driven-side member 42 approach each other, so that the clutch 40 is engaged. In addition, the clutch actuator 14 puts the clutch 40 to be in a half-clutch state during engaging operation of the clutch 40. When the clutch 40 is in a half-clutch state, only part of torque of the engine 30 is transmitted from the drive-side member 41 to the driven-side member 42.

The shift actuator drive circuit 15 supplies drive voltage or drive current to the shift actuator 16 in accordance with a control signal inputted from the control unit 11. The shift actuator 16 includes, for example, a motor and a power transmission mechanism (such as hydraulic path and wire), and is driven by receiving the electric power supplied from the shift actuator drive circuit 15. The shift actuator 16 actuates the gearshift mechanism 56 to change the shift gears 53a, 53b, 54a, 54b to transmit torque from the main shaft 52 to the countershaft 55, in order to change the reduction ratios.

The spark plug drive circuit 24 switches electric current ON or OFF, the electric current being supplied to drive the spark plug 31a, according to a control signal inputted from the control unit 11. The spark plug 31a ignites at the time when the electric current is switched ON or OFF.

The accelerator operation detector 17 is designed to detect an amount of the accelerator operation by the rider (hereinafter referred to as accelerator displacement). Examples of the accelerator operation detector 17 are a throttle position sensor for detecting a throttle opening and an accelerator position sensor mounted to the accelerator grip 5a to detect a rotation angle of the accelerator grip 5a. Based on the signal outputted from the accelerator operation detector 17, the control unit 11 detects the accelerator displacement by the rider.

The engine speed detector 18 is designed to detect a rotational speed of the engine 30 (hereinafter referred to as engine speed). Example of the engine speed detector 18 are a crank angle sensor for outputting a pulse signal with a frequency according to the rotational speed of the crankshaft 43 or the primary reduction gears 36a, 36b and a tachogenerator for outputting a voltage signal according to the rotational speed thereof. The control unit 11 calculates the engine speed based on the signal inputted from the engine speed detector 18.

The vehicle speed detector 19 is designed to detect a vehicle speed and outputs a signal to the control unit 11 according to, for example, the rotational speed of the axle 3a of the rear wheel 3 or that of the countershaft 55. The control unit 11 calculates the vehicle speed based on the signal inputted from the vehicle speed detector 19. The vehicle speed detector 19 may output a signal to the control unit 11 according to the rotational speed of the main shaft 52. In this case, the control unit 11 calculates the vehicle speed not only based on the input signal, but also based on the reduction ratio of the gearbox 51 and that of the transmission mechanism 57.

The gear position detector 21 is designed to detect positions of the shift gears 53a, 53b, 54a, 54b provided movably in the axial direction of the countershaft 55 or the main shaft 52. An example of the gear position detector 21 is a potentiometer mounted to the gearshift mechanism 56 or the shift actuator 16. The gear position detector 21 outputs a signal to the control unit 11 according to the positions of the shift gears 53a, 53b, 54a, 54b. Based on the input signal, the control unit 11 detects that movements of the shift gears 53a, 53b, 54a, 54b, which are associated with the gear shifting, have been completed.

The clutch position detector 22 is designed to detect the degree of engagement of the clutch 40. Examples of the clutch position detector 22 are a potentiometer for outputting a signal according to the position of the push rod 43 and a potentiometer for outputting a signal according to the position or the rotation angle of the output shaft of the clutch actuator 14. Based on the signal inputted from the clutch position detector 22, the control unit 11 detects the degree of engagement of the clutch 40.

The clutch rotational speed detector 23a is designed to detect the rotational speed of the drive-side member 41 (hereinafter referred to as rotational speed of the drive-side member 41). Examples of the clutch rotational speed detector 23a are a rotary encoder for outputting a pulse signal with a frequency according to the rotational speed of the drive-side member 41 and a tachogenerator for outputting a voltage signal according to the rotational speed of the drive-side member 41. In turn, the clutch rotational speed detector 23b is designed to detect the rotational speed of the driven-side member 42 (hereinafter referred to as rotational speed of the driven-side member 42). Examples of the clutch rotational speed detector 23b are a rotary encoder and a tachogenerator, as described for the clutch rotational speed detector 23a.

The shift-up switch 9a and the shift-down switch 9b are designed for the rider to provide instructions to change the shift gears 53a, 53b, 54a, 54b to the clutch controller 11. These switches 9a, 9b output a signal to the control unit 11 according to the gear shift instructions. The control unit 11 actuates the shift actuator 16 according to the input signal to change the shift gears 53a, 53b, 54a, 54b to transmit torque from the main shaft 52 to the countershaft 55. The shift-up switch 9a and the shift-down switch 9b are provided adjacent to the accelerator grip 5a, for example.

Now, description is made of the processing executed by the control unit 11. During engaging operation of the clutch 40, the control unit 11 obtains torque Tac transmitted from the drive-side member 41 to a downstream mechanism (such as the driven-side member 42 or the countershaft 55 and the axle 3a located downstream of the driven-side member 42 in this example) in the torque transmission path including the driven-side member 42 (hereinafter the torque is referred to as actual transmission torque). In addition, the control unit 11 obtains torque Ttg which is supposed to be transmitted from the drive-side member 41 to the downstream mechanism (hereinafter the torque is referred to as target transmission torque). Then, the control unit 11 actuates the actuator 14 based on the difference between the actual transmission torque Tac and the target transmission torque Ttg to control the degree of engagement of the clutch 40.

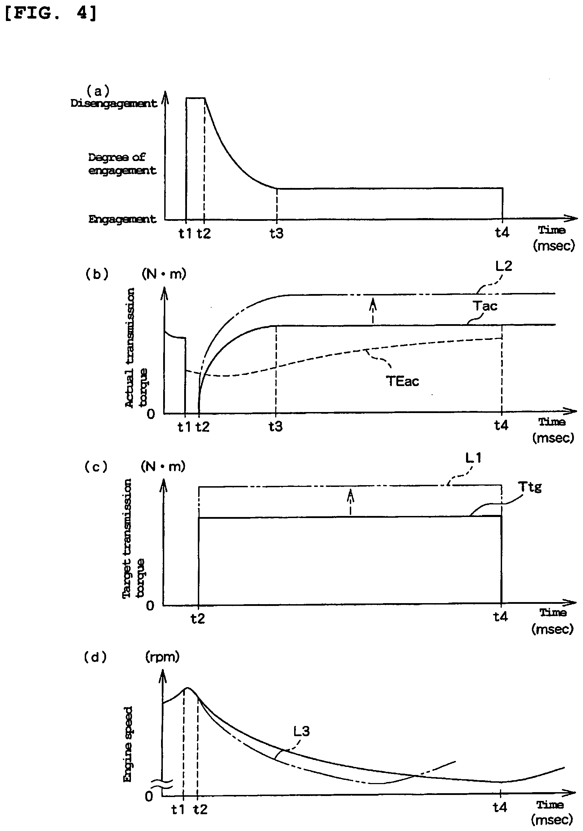

FIGs. 4(a) to 4(d) are time charts for describing the overview of the control by means of the control unit 11. FIG. 4(a) shows an example of changes in degree of engagement of the clutch 40 at the time of gear shifting. FIG. 4(b) shows an example of changes in actual transmission torque Tac. FIG. 4(c) shows an example of changes in target transmission torque Ttg. FIG. 4(d) shows an example of changes in engine speed. A broken line in FIG. 4(b) shows changes in torque TEac outputted from the engine 30 (torque transmitted from the engine 30 via the primary speed reducing mechanism 36 to the drive-side member 41 in this description (hereinafter referred to as EG torque)). Here, description is made for the shift-up operation as an example.

At the time t1, when the rider turns the shift-up switch 9a ON, the control unit 11 allows the clutch 40 to be disengaged, as shown in FIG. 4(a). Consequently, as shown in FIG. 4(b), the actual transmission torque Tac is 0. At the time t2, the control unit 11 starts engaging operation of the clutch 40 after some of the shift gears 53a, 53b, 54a, 54b have been already moved.

Specifically, as shown in FIG. 4(c), the control unit 11 sets the target transmission torque Ttg, while actuating the clutch actuator 14 such that the actual transmission torque Tac approximates the target transmission torque Ttg. Thereby, as shown in FIG. 4(a), the clutch 40 is switched from the disengaged state to the half-clutch state. While the clutch 40 is in the half-clutch state, the degree of engagement of the clutch 40 is enhanced gradually. Consequently, as shown in FIGs. 4(b) and 4(c), the actual transmission torque Tac reaches the target transmission torque Ttg at the time t3. After that, the control unit 11 also actuates the clutch actuator 14 such that the actual transmission torque Tac follows the target transmission torque Ttg. Then, as shown in FIG. 4(a), the control unit 11 allows the clutch 40 to be completely engaged at the point in time (t4) when the difference in rotational speed between the drive-side member 41 and the driven-side member 42 (hereinafter referred to as clutch rotational speed difference) is smaller than a predetermined value (for example, 0 or close to 0, hereinafter referred to as rotational speed difference for discontinuing half-clutch).

In addition, at the time of shift-up operation, the control unit 11 controls the engine to reduce the EG torque TEac (for example, retarding control). Thus, as shown by the broken line in FIG. 4(b), the EG torque TEac is lower at the time t1 than the past values of the actual transmission torque Tac. Then, at the time t2, when the engaging operation of the clutch 40 starts, the actual transmission torque Tac increases and is higher than the EG torque TEac. When the actual transmission torque Tac is higher than the EG torque TEac, not only the EG torque TEac, but also the torque produced due to the inertia of the engine 30 and the primary speed reducing mechanism 36 (hereinafter the torque is referred to as inertia torque Tlac) are transmitted as the actual transmission torque Tac. Thus, in this case, as shown by the solid line in FIG. 4(d), the engine speed decreases gradually from the time t2 to t4 at a rate according to the difference between the EG Torque TEac and the actual transmission torque Tac. Generally, the engine output characteristics show that the EG torque TEac increases as the engine speed decreases. Thus, as shown in FIG. 4(b), the EG torque TEac increases from the time t2 to t4 as the engine speed decreases. The engine speed increases or decreases in such a manner during engaging operation of the clutch 40. This eliminates the clutch rotational speed difference at the time t4, and therefore, the half-clutch state is discontinued under the aforementioned control by the control unit 11.

At the time t4 when the drive-side member 41 is completely engaged with the driven-side member 42, the control unit 11 stops the aforementioned engine control designed to reduce the EG torque TEac. Therefore, the EG torque TEac increases at the time t4.

Under such control that the actual transmission torque Tac approximates the target transmission torque Ttg, the clutch rotational speed difference is reduced at an excessively low rate, which can require a long time for engaging operation of the clutch 40. Specifically, if the difference is small between the EG torque TEac and the actual transmission torque Tac, the clutch rotational speed difference is reduced at a low rate. The reasons for this event are described below.

As described above, the engine speed increases or decreases at a rate according to the difference between the EG torque TEac and the actual transmission torque Tac. In other words, as shown in FIGs. 4(a) to 4(d), if the EG Torque TEac is lower than the actual transmission torque Tac, the inertia torque Tlac of the engine 30 is transmitted as part of the actual transmission torque Tac via the clutch 40. Thus, the engine speed decreases at a rate according to the difference between the EG torque TEac and the actual transmission torque Tac or according to the inertia torque Tlac. In contrast, if the EG torque TEac is higher than the actual transmission torque Tac, the difference therebetween contributes to an increase in engine speed, and the increasing rate depends on the difference between the EG torque TEac and the actual transmission torque Tac. Under the aforementioned control such that the actual transmission torque Tac approximates the target transmission torque Ttg, setting the target transmission torque Ttg at a value close to the EG torque TEac results in a smaller difference between the EG torque TEac and the actual transmission torque Tac during engaging operation of the clutch. In this case, the engine speed increases or decreases at an excessively low rate, and accordingly, the clutch rotational speed difference is reduced at a lower rate. Thus, it takes the clutch 40 too much time for its engaging operation.

In order to avoid such a situation, the control unit 11 determines whether or not the clutch rotational speed difference is reduced at an appropriate rate, and according to the determination result, corrects the target transmission torque Ttg. Specifically, as shown by the phantom line L1 in FIG. 4(c), the control unit 11 corrects the target transmission torque Ttg to increase the difference between the target transmission torque Ttg and the EG torque TEac. This results in a larger difference between the actual transmission torque Tac and the EG torque TEac during engaging operation of the clutch, as shown in the phantom line L2 in FIG. 4(b). Thereby, as shown by the phantom line L3 in FIG. 4(d), the engine speed decreases at a higher rate, and therefore, it takes a shorter time until the clutch rotational speed difference is below the rotational speed difference for discontinuing half-clutch. Up to this point, the discussion has focused on the overview of the control by means of the control unit 11. The processing executed by the control unit 11 will be discussed below in details.

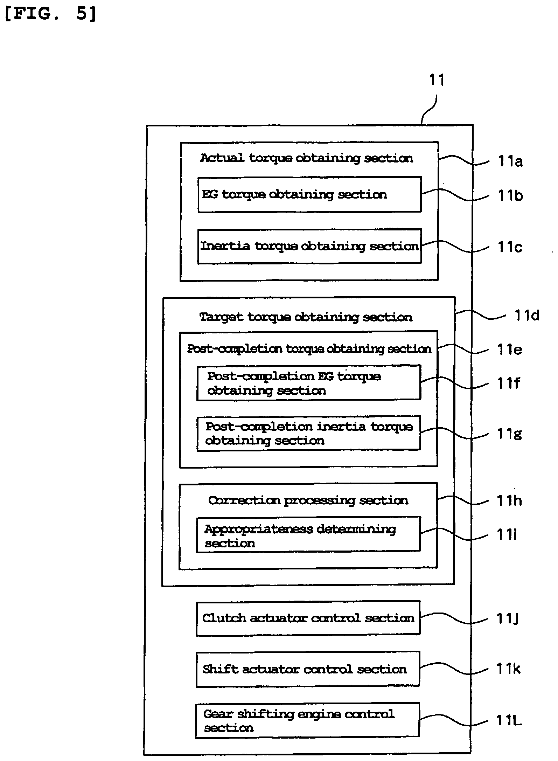

FIG. 5 is a block diagram illustrating the processing functions of the control unit 11. As shown in FIG. 5, the control unit 11 includes: an actual torque obtaining section 11a; a target torque obtaining section 11d; a clutch actuator control section 11j; a shift actuator control section 11k; and gear shifting engine control section 11L. The actual torque obtaining section 11a includes an EG torque obtaining section 11b and an inertia torque obtaining section 11c. In turn, the target torque obtaining section 11d includes a post-completion torque obtaining section 11e and a correction processing section 11h.

Description is first made of the actual torque obtaining section 11a. The actual torque obtaining section 11a calculates the actual transmission torque Tac based on the EG torque TEac and the torque Tlac produced due to the inertia of the mechanism (such as the crankshaft 34, the piston 32 and the primary speed reducing mechanism 36) upstream of the drive-side member 41 in the torque transmission path (hereinafter the torque is referred to as inertia torque). The actual torque obtaining section 11a executes this processing in a predetermined sampling cycle (for example, several milliseconds) during engaging operation of the clutch 40. The actual transmission torque Tac is herein described as torque transmitted to the driven-side member 42 in the mechanism downstream of the drive-side member 41.

Description is first made of the processing for obtaining the EG torque TEac. The storage unit 12 stores in advance a table that establishes the correspondence between the EG torque TEac, and the engine speed and the accelerator displacement (hereinafter the table is referred to as EG torque table). Then, the EG torque obtaining section 11b detects the accelerator displacement based on the signal inputted from the accelerator operation detector 17, while detecting the engine speed based on the signal inputted from the engine speed detector 18. Then, the EG torque obtaining section 11b refers to the EG torque table to obtain the EG torque TEac that corresponds to the detected accelerator displacement and engine speed.

In place of the EG torque table, the storage unit 12 may store in advance an expression that represents the relationship between the engine speed, the accelerator displacement and the EG torque TEac (hereinafter the expression is referred to as EG torque relational expression). In this case, the EG torque obtaining section 11b substitutes the detected engine speed and accelerator displacement into the EG torque relational expression in order to calculate the EG torque TEac.

Alternatively, the EG torque obtaining section 11b may obtain the EG torque TEac based on pressure of air flowing through the interior of the intake pipe 35 (hereinafter the pressure is referred to as intake pressure). For example, the storage unit 12 may store in advance a table that establishes the correspondence between the EG torque TEac, and the intake pressure and the engine speed. In addition, a pressure sensor for outputting a signal according to the intake pressure is disposed in the intake pipe 35. In this case, the EG torque obtaining section 11b detects the engine speed at the time when the crank angle is a predetermined value (for example, at the end of intake stroke), while detecting the intake pressure based on the signal inputted from the pressure sensor. Then, the EG torque obtaining section 11b refers to the table stored in the storage unit 12 to obtain the EG torque TEac that corresponds to the detected intake pressure and engine speed.

The inertia torque Tlac is a value determined according to the variation in engine speed $\Omega e$ per unit time ($d\Omega e / dt$, hereinafter referred to as rate-of-change of EG speed). The storage unit 12 stores in advance an expression that associates the inertia torque Tlac with the rate-of-change of EG speed ($d\Omega e / dt$). Specifically, the storage unit 12 stores in advance an expression, in which the inertia torque Tlac is equal to a value ($I \times (d\Omega e / dt)$) obtained by multiplying the inertial moment I on the mechanism upstream of the drive-side member 41 by the rate-of-change of EG speed ($d\Omega e / dt$). In this case, the inertia torque obtaining section 11c calculates the rate-of-change of EG speed ($d\Omega e / dt$) based on the signal inputted from the engine speed detector 18. Then, the inertia torque obtaining section 11c multiplies the rate-of-change of EG speed ($d\Omega e / dt$) by the inertial moment I, and defines the multiplication result ($I \times (d\Omega e / dt)$) as inertia torque Tlac. The storage unit 12 may store in advance a table that establishes the correspondence between the rate-of-change of EG speed ($d\Omega e / dt$) and the inertia torque Tlac. In this case, the inertia torque obtaining section 11c refers to the table to obtain the inertia torque Tlac that corresponds to the rate-of-change of EG speed ($d\Omega e / dt$).

The actual torque obtaining section 11a substitutes the EG torque TEac and the inertia torque Tlac, which are obtained from the aforementioned processing, into the expression stored in advance in the storage unit 12 and representing the relationship between the EG torque TEac, the inertia torque Tlac and the actual transmission torque Tac, in order to calculate the actual transmission torque Tac. For example, the actual torque obtaining section 11a substitutes these EG torque TEac and inertia torque Tlac into the following expression (1).

$$Tac = TEac - Tlac \cdots\cdots(1)$$

The torque transmitted to the driven-side member 42 in the mechanism located downstream of the drive-side member 41 is herein described as actual transmission torque Tac. However, the actual torque obtaining section 11a may calculate torque transmitted to the countershaft 55 or the mechanism downstream of the countershaft 55 as actual transmission torque Tac, for example. In this case, the actual torque obtaining section 11a obtains torque by multiplying the value, which is obtained from the aforementioned expression (1), by the reduction ratio of the gearbox 51 after the end of gear shifting (the gear ratio of the shift gears after shift-up or shift-down operation) and by the reduction ratio of the transmission mechanism 57, and defines the obtained torque as actual transmission torque Tac.

In addition, when the torque produced on the mechanism upstream of the primary speed reducing mechanism 36 is stored as EG torque TEac in the aforementioned EG torque table, the actual torque obtaining section 11a multiplies the EG torque TEac, which is obtained from the aforementioned processing, by the reduction ratio of the primary speed reducing mechanism 36 (the number of teeth of the driven-side primary reduction gear 36b / the number of teeth of the drive-side primary reduction gear 36a) in order to calculate the actual transmission torque Tac.

The processing for calculating the actual transmission torque Tac is not limited to the aforementioned processing. For example, the storage unit 12 may store in advance a table or an expression that establishes the correspondence between the actual transmission torque Tac, and the engine speed, the accelerator displacement and the rate-of-change of EG speed. In this case, the actual torque obtaining section 11a uses the table or the expression to directly obtain the actual transmission torque Tac from the engine speed, the rate-of-change of EG speed and the accelerator displacement.

Now, description is made of the processing executed by the gear shifting engine control section 11L. At the time of gear shifting, if the rotational speed of the drive-side member 41 is higher than the rotational speed of the driven-side member 42, the gear shifting engine control section 11L controls the engine to reduce the torque outputted from the engine 30. For example, the gear shifting engine control section 11L controls the ignition timing of the spark plug 31a to retard it relative to the normal ignition timing (during normal driving with the clutch 40 completely engaged) (hereinafter referred to as retarding control), thereby reducing the EG torque TEac. In other words, the gear shifting engine control section 11L causes the spark plug 31a to ignite at a crank angle that reaches at a timing delayed from the crank angle at which the spark plug 31a ignites during normal driving.

At the time of shift-up operation, some of the shift gears 53a, 53b, 54a, 54b, whose reduction ratios are relatively higher, are changed to the other shift gears, whose reduction ratios are relatively lower. Therefore, due to the changes between the shift gears 53a, 53b, 54a, 54b, the rotational speed of the driven-side member 42 is lower than the rotational speed of the drive-side member 41. Thus, for example, at the time when the shift-up switch 9a is pressed down, the gear shifting engine control section 11L starts the retarding control. Alternatively, the gear shifting engine control section 11L may actually calculate the difference in rotational speed between the drive-side member 41 and the driven-side member 42, and if the calculated difference in rotational speed is greater than 0, then may start the retarding control.

In the middle of the retarding control, the aforementioned EG torque obtaining section 11b calculates torque, which is reduced under the retarding control, as EG torque TEac. For example, the storage unit 12 stores in advance torque to be reduced in the case when the retarding control is performed (hereinafter the torque is referred to as reduced torque). The EG torque obtaining section 11b subtracts the reduced torque from the torque, which is obtained by referring to the EG torque table in the aforementioned processing, and defines the obtained value as EG torque TEac.

Now, description is made of the processing executed by the target torque obtaining section 11d. As described above, the target torque obtaining section 11d includes the post-completion torque obtaining section 11e. The post-completion torque obtaining section 11e calculates torque (torque obtained at the time t4 in the example shown in FIGs. 4(a) to 4(d)) which is estimated to be transmitted from the drive-side member 41 of the clutch 40 to the mechanism (the driven-side member 42 in this description) downstream of the drive-side member 41 after completion of the engagement of the clutch 40. Then, the post-completion torque obtaining section 11e defines the calculated torque as target transmission torque Ttg. Specifically, the post-completion torque obtaining section 11e estimates torque TEfin to be outputted from the engine 30 after completion of the engagement of the clutch 40 (hereinafter the torque is referred to as post-completion EG torque). In addition, the post-completion torque obtaining section 11e estimates inertia torque Tlfin to be produced on the mechanism upstream of the drive-side member 41 in the torque transmission path after completion of the clutch engagement (hereinafter the inertia torque is referred to as post-completion inertia torque). Then, based on the estimated post-completion EG torque TEfin and post-completion inertia torque Tlfin, the post-completion torque obtaining section 11e calculates torque Tfin to be estimated to be transmitted from the drive-side member 41 to the driven-side member 42 after completion of the engagement of the clutch 40 (hereinafter the torque is referred to as post-completion transmission torque).

Description is first made of the processing for estimating the post-completion EG torque TEfin. As shown in FIG. 5, the post-completion torque obtaining section 11e includes a post-completion EG torque obtaining section 11f. Before starting engaging operation of the clutch 40 or during the engaging operation, the post-completion EG torque obtaining section 11f calculates the rotational speed of the driven-side member 42 or the rotational speed of the mechanism downstream of the driven-side member 42, and based on the calculated rotational speed, estimates the engine speed Ωfin after completion of the clutch engagement. Then, the post-completion EG torque obtaining section 11f estimates the post-completion EG torque TEfin based on the estimated engine speed Ωfin and the accelerator displacement.

For example, the post-completion EG torque obtaining section 11f detects the current rotational speeds of the driven-side member 42 and the drive-side member 41, and calculates the clutch rotational speed difference Ωdiff between these detected rotational speeds. In addition, the post-completion EG torque obtaining section 11f calculates the current engine speed Ωe. Then, the post-completion EG torque obtaining section 11f substitutes the calculated clutch rotational speed difference Ωdiff and engine speed Ωe into the expression stored in advance in the storage unit 12, and defines the obtained value as engine speed Ωfin after completion of the clutch engagement. For example, the post-completion EG torque obtaining section 11f substitutes the current clutch rotational speed difference Ωdiff and engine speed Ωe into the following expression (2), and defines the obtained value as engine speed Ωfin after completion of the clutch engagement.

$$\Omega fin = \Omega e - (\Omega diff \times Pratio) \quad \cdots (2)$$

In addition, the post-completion EG torque obtaining section 11f detects the accelerator displacement based on the signal inputted from the accelerator displacement detector 17. Then, for example, the post-completion EG torque obtaining section 11f defines the torque, which corresponds to the engine speed Ωfin and the accelerator displacement in the aforementioned EG torque table, as post-completion EG torque TEfin. In the expression (2), Pratio represents the reduction ratio of the primary speed reducing mechanism 36. In addition, the post-completion EG torque TEfin thus calculated is considered as torque estimated to be outputted from the engine 30 after completion of the clutch engagement under no retarding control.

Now, description is made of the processing for estimating the post-completion inertia torque Tlfin. As shown in FIG. 5, the post-completion torque obtaining section 11e includes a post-completion inertia torque obtaining section 11g. The post-completion inertia torque obtaining section 11g estimates the post-completion inertia torque Tlfin based on the current rate-of-change of the rotational speed (the variation in rotational speed per unit time (hereinafter referred to as rate-of-change of rotational speed)) of the mechanism (such as the driven-side member 42, the countershaft 55 and the axle 3a) located downstream of the drive-side member 41 in the torque transmission path.

Description is herein made of the processing for estimating the post-completion inertia torque Tlfin based on the rotational speed of the driven-side member 42 as the downstream mechanism. The post-completion inertia torque obtaining section 11g calculates the current rate-of-change of rotational speed (dΩcl / dt) of the driven-side member 42. Then, the post-completion inertia torque obtaining section 11g substitutes the calculated rate-of-change of rotational speed (dΩcl / dt) of the driven-side member 42 into, for example, the following expression (3) in order to calculate the post-completion inertia torque Tlfin.

$$Tlfin = I \times (d\Omega cl / dt) \times Pratio \quad \cdots (3)$$

The storage unit 12 stores in advance an expression that represents the relationship between the current rate-of-change of rotational speed (dΩcl / dt) of the driven-side member 42 and the post-completion inertia torque Tlfin.

Alternatively, the post-completion inertia torque obtaining section 11g may estimate the post-completion inertia torque Tlfin based on the rate-of-change of rotational speed of the countershaft 55, the axle 3a or the like, rather than based on the rate-of-change of rotational speed of the driven-side member 42. In this case, the post-completion inertia torque obtaining section 11g multiplies the rate-of-change of rotational speed of the above mechanism by the gear ratio of a mechanism located between the above mechanism and the engine 30 (for example, the gear ratio of the gearbox 51 and the gear ratio of the primary speed reducing mechanism 36 after the end of gear shifting) in order to calculate the post-completion inertia torque Tlfin.

The post-completion inertia torque obtaining section 11g executes the processing for calculating the aforementioned post-completion inertia torque Tlfin in a predetermined cycle (for example, several milliseconds) during engaging operation of the clutch 40. The post-completion inertia torque obtaining section 11g may not necessarily calculate the rate-of-change of rotational speed (dΩcl / dt) of the driven-side member 42 in a predetermined cycle, but alternatively, may calculate it immediately before the clutch 40 is disengaged (for example, several hundred milliseconds before the clutch 40 starts being disengaged (the time t1 in FIGs. 4(a) to 4(d))), and continue to use the calculated value for the subsequent processing during engaging operation of the clutch.

The post-completion torque obtaining section 11e substitutes the thus-calculated post-completion EG torque TEfin and post-completion inertia torque Tlfin into an expression stored in advance in the storage unit 12 in order to calculate the post-completion transmission torque Tfin. For example, the post-completion torque obtaining section 11e substitutes the post-completion EG torque TEfin arid the post-completion inertia torque Tlfin into the following expression (4) in order to calculate the post-completion transmission torque Tfin.

$$Tfin = TEfin - Tlfin \quad \cdots (4)$$

The post-completion torque obtaining section 11e tentatively sets the target transmission torque Ttg at the post-completion transmission torque Tfin thus calculated. In the event that no correction processing is performed by the correction processing section 11h that will be discussed later, the target transmission torque Ttg, set by the post-completion torque obtaining section 11e, is provided for the processing executed by the clutch actuator control section 11j.

Now, description is made of the processing executed by the correction processing section 11h. As shown in FIG. 5, the correction processing section 11h includes an appropriateness determining section 11i. The appropriateness determining section 11i determines whether or not the clutch rotational speed difference is reduced at an appropriate rate for engaging operation of the clutch 40. Specifically, the appropriateness determining section 11i determines whether or not the clutch rotational speed difference or an operating condition of the engine 30, which correlates with the rate at which the clutch rotational speed difference is reduced, satisfies a predetermined condition (hereinafter referred to as correction condition). The operating condition of the engine 30, which correlates with the rate at which the clutch rotational speed difference is reduced, is considered as, for example, the difference between the EG torque TEac and the actual transmission torque Tac or the rate at which such difference is reduced, and the difference between the EG torque TEac and the target transmission torque Ttg or the rate at which such difference is reduced. The appropriateness determining section 11i executes the processing as below, for example.

The appropriateness determining section 11i calculates the difference between the actual transmission torque Tac and the EG torque TEac obtained from the aforementioned processing during engaging operation of the clutch 40, and determines whether or not the calculated difference is smaller than a predetermined value (hereinafter referred to as correction condition torque difference). Then, if the calculated difference is smaller than the correction condition torque difference, the appropriateness determining section 11i determines that the aforementioned correction condition is satisfied. As described above, during engaging operation of the clutch 40, the rate at which the engine speed increases or decreases is determined according to the difference between the EG torque TEac and the actual transmission torque Tac. In turn, the rate at which the clutch rotational speed difference is reduced is determined according to the rate at which the engine speed increases or decreases and the vehicle acceleration. Thus, as the difference is greater between the EG torque TEac and the actual transmission torque Tac, the clutch rotational speed difference is reduced at an increased rate. In this example, the appropriateness determining section 11i thus determines whether or not the clutch rotational speed difference is reduced at an appropriate rate based on the difference between the EG torque TEac and the actual transmission torque Tac.

As described above, the control unit 11 controls the degree of engagement of the clutch 40 such that the actual transmission torque Tac approximates the target transmission torque Ttg (see FIGs. 4(a) to 4(d)). Thus, as a result that the difference between the EG torque TEac and the target transmission torque Ttg is smaller than the correction condition torque difference, the difference between the actual transmission torque Tac and the EG torque TEac is also smaller than the correction condition torque difference during engaging operation of the clutch. Therefore, the clutch rotational speed difference is reduced at a lower rate. Thus, the appropriateness determining section 11i may determine whether or not the clutch rotational speed difference is reduced at an appropriate rate based on the difference between the EG torque TEac and the target transmission torque Ttg calculated by the post-completion torque obtaining section 11e (the post-completion transmission torque Tfin), rather than based on the difference between the EG torque TEac and the actual transmission torque Tac. Specifically, if the difference between the EG torque TEac and the post-completion transmission torque Tfin is smaller than the correction condition torque difference, the appropriateness determining section 11i may determine that the aforementioned correction condition is satisfied.

Alternatively, during engaging operation of the clutch 40, the appropriateness determining section 11i may calculate the rate at which the difference between the EG torque TEac and the actual transmission torque Tac is reduced, and based on the calculated reduction rate of the difference, determine whether or not the clutch rotational speed difference is reduced at an appropriate rate. Specifically, during engaging operation of the clutch 40, the appropriateness determining section 11i may determine whether or not the rate at which the difference between the EG torque TEac and the actual transmission torque Tac is reduced is smaller than a predetermined value (hereinafter referred to as correction condition reduction rate). Thus, if this reduction rate of the difference is smaller than the correction condition reduction rate, the appropriateness determining section 11i may determine that the correction condition is satisfied.

Alternatively, the appropriateness determining section 11i may calculate the rate at which the difference between the EG torque TEac and the target transmission torque Ttg is reduced, and based on the calculated reduction rate of the difference, determine whether or not the clutch rotational speed difference is reduced at an appropriate rate. Specifically, during engaging operation of the clutch 40, the appropriateness determining section 11i may determine whether or not the rate at which the difference between the EG torque TEac and the target transmission torque Ttg is reduced is smaller than the correction condition reduction rate. Then, if the thus-calculated reduction rate of the difference is smaller than the correction condition reduction rate, the appropriateness determining section 11i may determine that the aforementioned correction condition is satisfied.

In addition, the operating condition of the engine 30, which correlates with the rate at which the clutch rotational speed difference is reduced, may be accelerator displacement or engine speed. In this case, the storage unit 12 stores in advance the engine speed, and the accelerator displacement by which the engine speed is estimated to increase or decrease at a lower rate. Then, the appropriateness determining section 11i detects the accelerator displacement and the engine speed in a predetermined cycle during engaging operation of the clutch 40, and determines whether or not the detected accelerator displacement and engine speed correspond with the accelerator displacement and the engine speed stored in advance in the storage unit 12, respectively. Then, if the detected accelerator displacement and engine speed respectively correspond with the thus-stored accelerator displacement and engine speed, the appropriateness determining section 11i may determine that the correction condition is satisfied.

Alternatively, during engaging operation of the clutch 40, the appropriateness determining section 11i may actually calculate the rate at which the clutch rotational speed difference is reduced, and based on the calculated reduction rate, determine whether or not the clutch rotational speed difference is reduced at an appropriate rate. Specifically, if this calculated reduction rate is lower than a predetermined value, the appropriateness determining section 11i may determine that the correction condition is satisfied.

Now, description is made of the correction processing executed by the correction processing section 11h. If the aforementioned appropriateness determining section 11i determines that the correction condition is satisfied, the correction processing section 11h corrects the target transmission torque Ttg that has been set at the post-completion transmission torque Tfin in the processing executed by the post-completion torque obtaining section 11e. Specifically, the correction processing section 11h corrects or increases the difference between the target transmission torque Ttg and the EG torque TEac based on the EG torque TEac. For example, the correction processing section 11h adds or subtracts a predetermined value ΔTmin (for example, the aforementioned correction condition torque difference) to or from the EG torque TEac, and defines the obtained value as corrected target transmission torque Ttg.

If the rotational speed of the drive-side member 41 is higher than the rotational speed of the driven-side member 42, the clutch rotational speed difference is eliminated by decreasing the rotational speed of the drive-side member 41 to the rotational speed of the driven-side member 42. Therefore, the actual transmission torque Tac need be higher than the EG torque TEac. Thus, in this case, the correction processing section 11h sets the target transmission torque Ttg at a value obtained by adding the correction condition torque difference ΔTmin to the EG torque TEac, in order to increase the difference between the EG torque TEac and the target transmission torque Ttg.

In contrast, if the rotational speed of the drive-side member 41 is lower than the rotational speed of the driven-side member 42, the clutch rotational speed difference is eliminated by increasing the rotational speed of the drive-side member 41 to the rotational speed of the driven-side member 42. Therefore, the actual transmission torque Tac need be lower than the EG torque TEac. Thus, in this case, the correction processing section 11h sets the target transmission torque Ttg at a value obtained by subtracting the correction condition torque difference ΔTmin from the EG torque TEac, in order increase to the difference between the EG torque TEac and the target transmission torque Ttg. In the processing in such a manner, the correction condition torque difference ΔTmin, which is added to the EG torque TEac, and the correction condition torque difference ΔTmin, which is subtracted from the EG torque TEac, may be difference values.

In addition, the correction processing executed by the correction processing section 11h may not be limited to the aforementioned processing. For example, the correction processing section 11h may multiply the target transmission torque Ttg, which is calculated by the post-completion torque obtaining section 11e, by a predetermined correction coefficient k (k>1), in order to increase the difference between the target transmission torque Ttg and the EG torque TEac.

Now, description is made of the processing executed by the clutch actuator control section 11j. During engaging operation of the clutch 40, the clutch actuator control section 11j actuates the clutch actuator 14 in a predetermined cycle based on the difference between the actual transmission torque Tac and the target transmission torque Ttg (hereinafter referred to as torque deviation). Specifically, the clutch actuator control section 11j actuates the clutch actuator 14 by an amount according to the torque deviation to allow the actual transmission torque Tac to approximate the target transmission torque Ttg. The clutch actuator control section 11j executes the following processing, for example.

The storage unit 12 stores in advance an expression that represents the relationship between the torque deviation (Ttg - Tac) and the amount by which the clutch actuator 14 is actuated (hereinafter the amount is referred to as command actuation amount) (hereinafter the expression is referred to as actuation amount relational expression). The clutch actuator control section 11j calculates the torque deviation (Ttg - Tac) every time the actual transmission torque Tac is calculated during engaging operation of the clutch 40. Then, the clutch actuator control section 11j substitutes the torque deviation (Ttg - Tac) into the actuation amount relational expression in order to calculate the command actuation amount, and outputs a control signal to the clutch actuator drive circuit 13 according to the calculated command actuation amount. The clutch actuator drive circuit 13 outputs electric power to drive the clutch actuator 14 according to the input control signal.

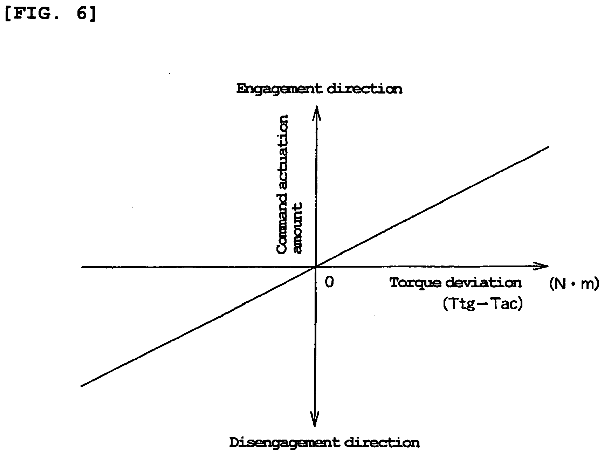

FIG. 6 is a graph showing the relationship between the torque deviation (Ttg - Tac) and the command actuation amount obtained from the actuation amount relational expression. In an example shown in FIG. 6, the actuation amount relational expression is established such that if the torque deviation (Ttg - Tac) is positive, the clutch actuator 14 is actuated in the direction to engage the clutch 40. In turn, the actuation amount relational expression is established such that if the torque deviation (Ttg - Tac) is negative, the clutch actuator 14 is actuated in the direction to disengage the clutch 40. In addition, the actuation amount relational expression is established such that the command actuation amount increases in proportion to the torque deviation (Ttg - Tac).

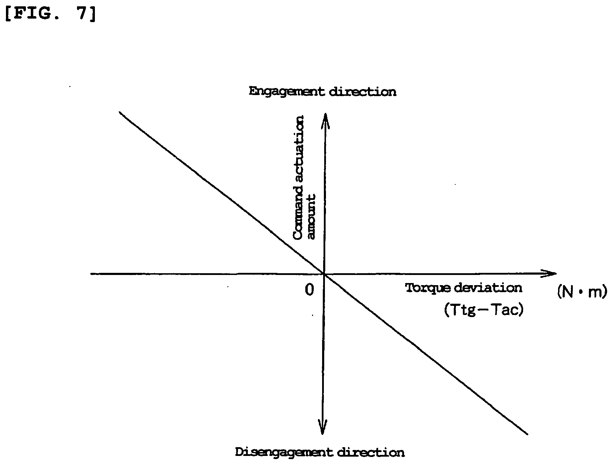

The storage unit 12 stores the actuation amount relational expressions; The one expression is established to actuate the clutch actuator 14 in the direction to engage the clutch 40, if the torque deviation (Ttg - Tac) is positive as shown in FIG. 6 (hereinafter the expression is referred to as engagement actuation amount relational expression). The other expression is established to actuate the clutch actuator 14 in the opposite direction or the direction to disengage the clutch 40 (hereinafter the expression is referred to as disengagement actuation amount relational expression). FIG. 7 is a graph showing the relationship between the torque deviation (Ttg - Tac) and the command actuation amount obtained from the disengagement actuation amount relational expression. In the graph shown in FIG. 7, the actuation amount relational expression is established such that if the torque deviation (Ttg - Tac) is positive, the clutch actuator 14 is actuated in the direction to disengage the clutch 40, in contrast to the graph shown in FIG. 6.

The clutch actuator control section 11j selects either the engagement actuation amount relational expression or the disengagement actuation amount relational expression, depending on a positive or negative value of the clutch rotational speed difference. Specifically, if the clutch rotational speed difference is positive, the clutch actuator control section 11j selects the engagement actuation amount relational expression to substitute the torque deviation (Ttg - Tac) into the engagement actuation amount relational expression. In contrast, if the clutch rotational speed difference is negative, the clutch actuator control section 11j selects the disengagement actuation amount relational expression to substitute the torque deviation (Ttg - Tac) into the disengagement actuation amount relational expression.

Alternatively, in place of the engagement actuation amount relational expression and the disengagement actuation amount relational expression, the storage unit 12 may store a table that establishes the correspondence between the command actuation amount, and the target transmission torque Ttg and the actual transmission torque Tac. In this case, the clutch actuator control section 11j refers to the table, without calculating the torque deviation (Ttg - Tac), to directly obtain the command actuation amount that corresponds to the target transmission torque Ttg and the actual transmission torque Tac.

The clutch actuator control section 11j actuates the clutch actuator 14 by an amount according to the torque deviation (Ttg - Tac) for engaging operation of the clutch 40. Consequently, when the clutch rotational speed difference is below the aforementioned rotational speed difference for discontinuing half-clutch, the clutch actuator control section 11j discontinues the half-clutch state to completely engage the drive-side member 41 with the driven-side member 42.

Now, description is made of the processing executed by the shift actuator control section 11k. When the rider operates the shift-up switch 9a or the shift-down switch 9b to input a gear shift command, the shift actuator control section 11k actuates the shift actuator 16 to change the shift gears 53a, 53b, 54a, 54b. Specifically, after detecting that the clutch 40 is disengaged based on the signal inputted from the clutch position detector 22, the shift actuator control section 11k outputs the control signal to the shift actuator drive circuit 15. The shift actuator 16 is actuated by the driving power supplied from the shift actuator drive circuit 15 in order to move some of the shift gears 53a, 53b, 54a, 54b.

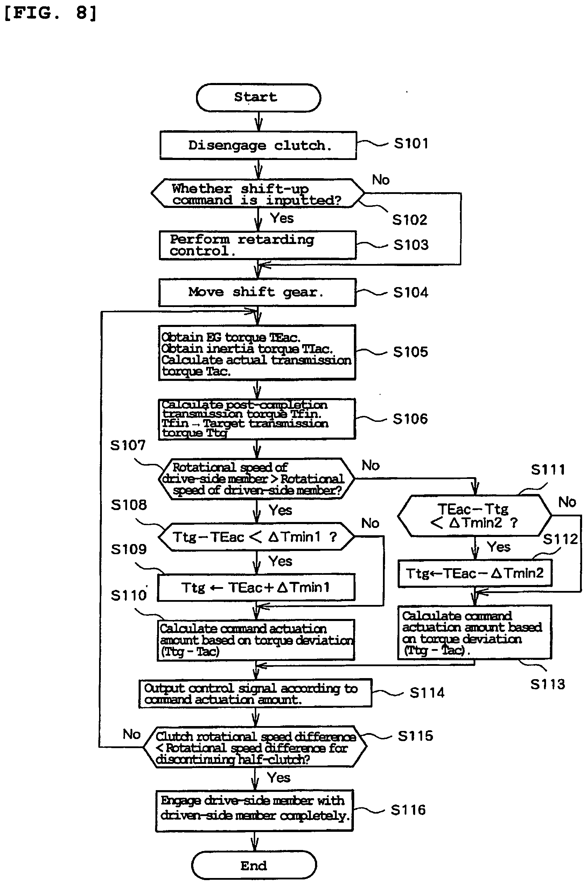

Now, description is made of a flow of the processing executed by the control unit 11. FIG. 8 is a flowchart showing an example of the processing executed by the control unit 11 at the time of gear shifting.

When the rider turns the shift-up switch 9a or the shift-down switch 9b ON, the clutch actuator control section 11j disengages the clutch 40 (step S101). The gear shifting engine control section 11L determined whether or not the shift-up command is inputted (step S102). In this step, if the shift-up command is inputted, the gear shifting engine control section 11L retards the ignition timing in the engine 30, thereby reducing the torque outputted from the engine 30 (step S103). In contrast, if the shift-down command, rather than the shift-up command, is inputted, the subsequent processing steps are executed, while maintaining the ignition timing in the engine 30 at the ignition timing for normal driving. After the clutch 40 is disengaged, the shift actuator control section 11k actuates the shift actuator 16 according to the gear shift command from the rider in order to move some of the shift gears 53a, 53b, 54a, 54b (step S104).

The control unit 11 starts engaging operation of the clutch 40 after detecting that some of the shift gears 53a, 53b, 54a, 54b have been already moved based on the signal inputted from the gear position detector 21. Specifically, the EG torque obtaining section 11b calculates the EG torque TEac, while the actual torque obtaining section 11a calculates the actual transmission torque Tac based on the calculated EG torque TEac and the inertia torque Tlac calculated by the inertia torque obtaining section 11c (step S105). In turn, the post-completion torque obtaining section 11e calculates the torque Tfin, which is estimated to be transmitted from the drive-side member 41 to the driven-side member 42 after completion of the engagement of the clutch 40 (hereinbefore the torque is referred to as post-completion transmission torque), and defines the calculated torque Tfin as tentative target transmission torque Ttg (step S106).

After that, the appropriateness determining section 11i starts the processing for determining whether or not the clutch rotational speed difference is reduced at an appropriate rate during engaging operation of the clutch 40. Specifically, first the appropriateness determining section 11i compares the rotational speed of the drive-side member 41 with the rotational speed of the driven-side member 42 (step S107). Then, if the rotational speed of the drive-side member 41 is relatively higher, the appropriateness determining section 11i determines whether or not the difference between the target transmission torque Ttg, calculated in the step S106, and the EG torque TEac, calculated in the step S105, (Ttg - TEac) is smaller than a correction condition torque difference ΔTmin1 (step S108). In this step, if the difference (Ttg - TEac) is smaller than the correction condition torque difference ΔTmin1, the correction processing section 11h adds the correction condition torque difference ΔTmin1 to the EG torque TEac, and sets the target transmission torque Ttg at the obtained value (TEac + ΔTmin1), rather than at the post-completion transmission torque Tfin (step S109). Then, the clutch actuator control section 11j substitutes the difference between the corrected target transmission torque Ttg and the actual transmission torque Tac (Ttg - Tac) into the engagement actuation amount relational expression, in order to calculate the amount, by which the clutch actuator 14 is to be actuated, or the command actuation amount (step S110). In contrast, in the step S108, if the difference (Ttg - TEac) is not determined to be smaller than the correction condition torque difference ΔTmin1, no correction processing is performed by the correction processing section 11h, and the clutch actuator control section 11j substitutes the difference between the actual transmission torque Tac and the target transmission torque Ttg, which is set at the post-completion transmission torque Tfin in the step S106, into the engagement actuation amount relational expression in order to calculate the command actuation amount (step S110).

In turn, if the comparison result from the step S107 shows that the rotational speed of the drive-side member 41 is lower than the rotational speed of the driven-side member 42, the appropriateness determining section 11i determines whether or not the difference between the target transmission torque Ttg, calculated in the step S106, and the EG torque TEac, calculated in the step S105, (TEac - Ttg) is smaller than a correction condition torque difference ΔTmin2 (step S111). In this step, if the difference (TEac - Ttg) is smaller than the correction condition torque difference ΔTmin2, the correction processing section 11h subtracts the correction condition torque difference ΔTmin2 from the EG torque TEac, and sets the target transmission torque Ttg at the obtained value (TEac - ΔTmin2), rather than at the post-completion transmission torque Tfin (step S112). Then, the clutch actuator control section 11j substitutes the difference between the corrected target transmission torque Ttg and the actual transmission torque Tac (Ttg - Tac) into the disengagement actuation amount relational expression, and calculates the command actuation amount (step S113). In contrast, in the step S111, if the difference (Ttg - TEac) is not determined to be smaller than the correction condition torque difference ΔTmin2, no correction processing is performed by the correction processing section 11h, and the clutch actuator control section 11j substitutes the difference between the actual transmission torque Tac and the target transmission torque Ttg, which is set at the post-completion transmission torque Tfin in the step S106, into the disengagement actuation amount relational expression in order to calculate the command actuation amount (step S113). When the command actuation amount is calculated in the step S110 or S113, the clutch actuator control section 11j outputs a control signal to the clutch actuator drive circuit 13 according to the command actuation amount (step S114). Thereby, the clutch actuator 14 is actuated by the amount according to the command actuation amount, so that the degree of engagement of the clutch 40 changes.

After that, the clutch actuator control section 11j calculates the clutch rotational speed difference, and determines whether or not the calculated clutch rotational speed difference is smaller than the rotational speed difference for discontinuing half-clutch (step S115). In this step, if the calculated clutch rotational speed difference is smaller than the rotational speed difference for discontinuing half-clutch, the clutch actuator control section 11j completely engages the drive-side member 41 with the driven-side member 42 to discontinue the half-clutch state (step S116). Thereby, the control unit 11 ends the processing for gear shifting. Simultaneously, the gear shifting engine control section 11L ends the retarding control. In contrast, in the step S115, if the calculated clutch rotational speed difference is not yet smaller than the rotational speed difference for discontinuing half-clutch, the control unit 11 returns to the step S105 to repeat the subsequent steps in a predetermined cycle (for example, several milliseconds) until the half-clutch state is discontinued in the step S116.

The processing executed by the control unit 11 is not limited to the above-mentioned processing. For example, the correction condition torque difference ΔTmin1, ΔTmin2 may not necessarily be a fixed value, but be determined depending on the clutch rotational speed difference. For example, the storage unit 12 may store a table that establishes the correspondence between the correction condition torque difference ΔTmin1, ΔTmin2 and the clutch rotational speed difference. In this table, for example, the correction condition torque difference ΔTmin1, ΔTmin2 is preset greater as the clutch rotational speed difference is greater. In this case, the control unit 11 calculates the clutch rotational speed difference and corrects the target transmission torque Ttg based on the correction condition torque difference ΔTmin1, ΔTmin2 that corresponds to the calculated clutch rotational speed difference.

The description is made by using the example of the flowchart in FIG. 8. Prior to the step S108 or S111, the control unit 11 calculates the clutch rotational speed difference and obtains the correction condition torque difference ΔTmin1, ΔTmin2 that corresponds to the calculated clutch rotational speed difference. Then, in the step S108 or S111, the control unit 11 compares the correction condition torque difference ΔTmin1, ΔTmin2, obtained from the table, with the difference between the target transmission torque Ttg and the EG torque TEac. If the difference between the target transmission torque Ttg and the EG torque TEac is smaller than the correction condition torque difference ΔTmin1, ΔTmin2, the control unit 11 adds the correction condition torque difference ΔTmin1 to the EG torque TEac in the step S109 or subtracts the correction condition torque difference ΔTmin2 from the EG torque TEac in the step S111. Thereby, when the clutch rotational speed difference is relatively large at the early stage of engaging operation of the clutch 40, the control unit 11 corrects the target transmission torque Ttg by a relatively large amount. This results in a higher rate-of-change of the engine speed.

In contrast, when the clutch rotational speed difference is reduced during engaging operation of the clutch 40, the difference between the corrected target transmission torque Ttg and the post-completion transmission torque Tfin is also reduced. Accordingly, the difference between the actual transmission torque Tac and the post-completion transmission torque Tfin is reduced. Consequently, variations in the actual transmission torque Tac are minimized at the time of completely engaging the drive-side member 41 with the driven-side member 42, which reduces shocks produced on the vehicle.

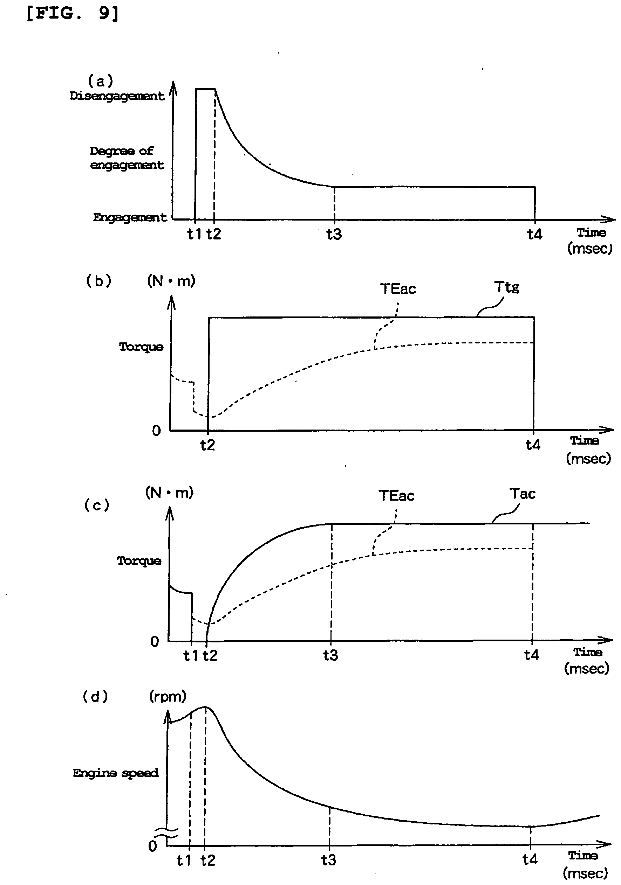

Description is made of changes in degree of engagement of the clutch 40, target transmission torque Ttg, actual transmission torque Tac and engine speed with respect to time in the case when the control discussed above is performed. FIGs. 9(a) to 9(d) through FIGs. 12(a) to 12(d) are time charts respectively showing examples of changes in degree of engagement of the clutch 40, target transmission torque Ttg, actual transmission torque Tac, EG torque TEac, and engine speed at the time of gear shifting. FIGs. 9(a), 10(a), 11(a), 12(a) show the degree of engagement of the clutch 40. FIGs. 9(b), 10(b), 11(b), 12(b) show the target transmission torque Ttg and the EG torque TEac. FIGs. 9(c), 10(c), 11(c), 12(c) show the actual transmission torque Tac and the EG torque TEac. FIGs. 9(d), 10(d), 11(d), 12(d) show the engine speed.

Description is first made for the shift-up operation with reference to FIGs. 9(a) to 9(d). In the example herein described, the rotational speed of the drive-side member 41 is higher than the rotational speed of the driven-side member 42, and the post-completion transmission torque Tfin, which is calculated by the post-completion torque obtaining section 11e, is high enough (the target transmission torque Ttg, which is set at the post-completion transmission torque Tfin, is higher than the EG torque TEac by an amount equal to or greater than the correction condition torque difference ΔTmin1).

At the time t1, when the rider presses the shift-up switch 9a down, the clutch 40 is switched from the engaged state to the disengaged state, as shown in FIG. 9(a). Consequently, as shown in FIG. 9(c), the actual transmission torque Tac is 0. Simultaneously, because the gear shifting engine control section 11L starts the retarding control, the EG torque TEac is lower than the past values of the actual transmission torque Tac. As described above, after the clutch 40 is switched to the disengaged state, the shift actuator control section 11k moves some of the shift gears 53a, 53b, 54a, 54b.

At the time t2, when some of the shift gears 53a, 53b, 54a, 54b have been already moved, the post-completion torque obtaining section 11f calculates the post-completion torque Tfin. The post-completion torque Tfin is considered as torque estimated to be transmitted via the clutch 40 after completion of the engagement of the clutch 40. In this example, the post-completion torque Tfin is the actual transmission torque Tac at the time t4. As described above, in the example herein described, the post-completion transmission torque Tfin is higher than the EG torque TEac by an amount equal to or greater than the correction condition torque difference ΔTmin1. Thus, at the time t2, the target transmission torque Ttg is set at the post-completion transmission torque Tfin, and no correction processing for the target transmission torque Ttg is therefore performed.

After the target transmission torque Ttg is set at the time t2, engaging operation of the clutch 40 starts. Specifically, under the control by the clutch actuator control section 11j, the clutch actuator 14 is actuated by an amount according to the difference between the target transmission torque Ttg and the actual transmission torque Tac. Thus, as shown in FIGs. 9(a) and 9(c), as the clutch 40 is gradually closer to the engaged state, the actual transmission torque Tac gradually approximates the target transmission torque Ttg. Then, at the time t3, the actual transmission torque Tac reaches the target transmission torque Ttg. After that, the difference between the actual transmission torque Tac and the target transmission torque Ttg is almost eliminated, and therefore, the degree of engagement of the clutch 40 is almost maintained, as shown in FIG. 9(a).

As shown in FIG. 9(c), the actual transmission torque Tac exceeds the EG torque TEac in the process of its increase to the target transmission torque Ttg. Thus, as shown in FIG. 9(d), the engine speed starts decreasing gradually from the point in time when the actual transmission torque Tac exceeds the EG torque TEac. Thereby, the clutch rotational speed difference is gradually closer to 0. Generally, the output characteristics of the engine 30 show that the EG torque TEac increases as the engine speed decreases. Thus, as shown in FIG. 9(c), the EG torque TEac gradually increases. Consequently, the difference between the EG torque TEac and the actual transmission torque Tac is gradually reduced, and therefore, the engine speed decreases at a gradually lower rate, as shown in FIG. 9(d).

At the time t4, when the clutch rotational speed difference is smaller than the rotational speed difference for discontinuing half-clutch, the clutch 40 is completely engaged, as shown in FIG. 9(a). In addition, the gear shifting engine control section 11L ends the retarding control, and accordingly, the EG torque TEac increases, as shown in FIG. 9(c). As described above, in the processing for calculating the post-completion transmission torque Tfin, the post-completion EG torque TEfin, which is calculated by the post-completion EG torque obtaining section 11e, is considered as torque estimated to be outputted from the engine 30 after completion of the clutch engagement under no retarding control. In addition, the rotational speed difference for discontinuing half-clutch is preset at 0 or close to 0. At the time t4, the drive-side member 41 is completely engaged with the driven-side member 42, resulting in 0 inertia torque Tlac. This allows the actual transmission torque Tac to be kept almost constant at around the time t4 when the retarding control ends.

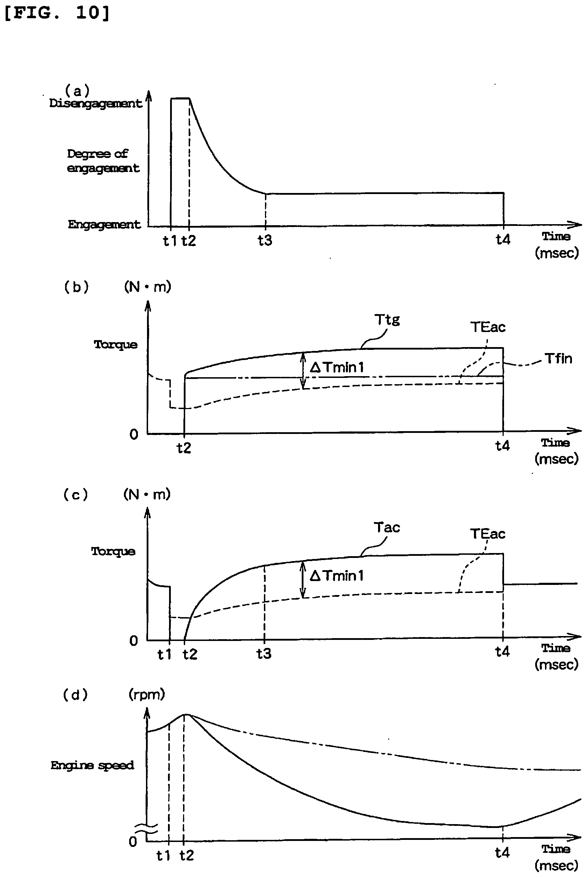

Now, with reference to FIGs. 10(a) to 10(d), description is made of a case where the rotational speed of the drive-side member 41 is higher than the rotational speed of the driven-side member 42, and the post-completion transmission torque Tfin is relatively low (where the difference between the EG torque TEac and the target transmission torque Ttg set at the post-completion transmission torque Tfin is smaller than the correction condition torque difference ΔTmin1).

As in the case shown in FIGs. 9(a) to 9(d), at the time t1, when the rider presses the shift-up switch 9a down, the clutch 40 is switched from the engaged state to the disengaged state (see FIG. 10(a)). Consequently, the actual transmission torque Tac is 0 (see FIG. 10(c)). Simultaneously, because the gear shifting engine control section 11L starts the retarding control, the EG torque TEac is lower than the past values of the actual transmission torque Tac. After that, at the time t2, when some of the shift gears 53a, 53b, 54a, 54b have been already moved, the target transmission torque 11e performs the processing to set the target transmission torque Ttg. As described above, in the description herein, the difference between the EG torque TEac and the target transmission torque Ttg that is set at the post-completion transmission torque Tfin (torque shown by the phantom line in FIG. 10(b)) is smaller than the correction condition torque difference ΔTmin1. Thus, the correction processing section 11h performs the processing to set the target transmission torque Ttg at a value obtained by adding the correction condition torque difference ΔTmin1 to the EG torque TEac (TEac + ΔTmin1).

After the target transmission torque Ttg is set at the time t2, engaging operation of the clutch 40 starts. Specifically, as shown in FIGs. 10(a) and 10(b), as the clutch 40 is gradually closer to the engaged state, the actual transmission torque Tac gradually approximates the target transmission torque Ttg. Then, at the time t3, the actual transmission torque Tac reaches the target transmission torque Ttg.

In this case, as in the case shown in FIGs. 9(a) to 9(d), the actual transmission torque Tac exceeds the EG torque TEac in the process of its increase to the target transmission torque Ttg (see FIG. 10(c)). Thus, as shown in FIG. 10(d), the engine speed starts decreasing gradually from the point in time when the actual transmission torque Tac exceeds the EG torque TEac. Thereby, the clutch rotational speed difference is gradually closer to 0.

After that, at the time t4, when the clutch rotational speed difference is smaller than the rotational speed difference for discontinuing half-clutch, the clutch 40 is completely engaged, as shown in FIG. 10(a), so that the half-clutch state is discontinued. Simultaneously, the gear shifting engine control section 11L ends the retarding control, and accordingly, the EG torque TEac increases, as shown in FIG. 10(c). As described above, the rotational speed difference for discontinuing half-clutch is preset at 0 or close to 0. At the time t4, the drive-side member 41 is completely engaged with the driven-side member 42, resulting in 0 inertia torque Tlac. In addition, as described above, for calculating the post-completion transmission torque Tfin, the post-completion EG torque TEfin, which is calculated by the post-completion EG torque obtaining section 11e, is considered as torque estimated to be outputted from the engine 30 after completion of the clutch engagement under no retarding control. Thus, at the time t4, the actual transmission toque Tac decreases slightly, thereby corresponding with the post-completion transmission torque Tfin.

The phantom line in FIG. 10(d) shows an example of changes in engine speed with respect to time in the case when no correction processing is performed by the correction processing section 11h. As described above, the correction processing section 11h performs the processing to set the target transmission torque Ttg at a value obtained by adding the correction condition torque difference $\Delta$Tmin1 to the EG torque TEac. Thus, as shown in FIG. 10(d), the rate at which the engine speed decreases is kept higher compared to the case with no correction processing, and the clutch rotational speed difference is thus eliminated earlier.

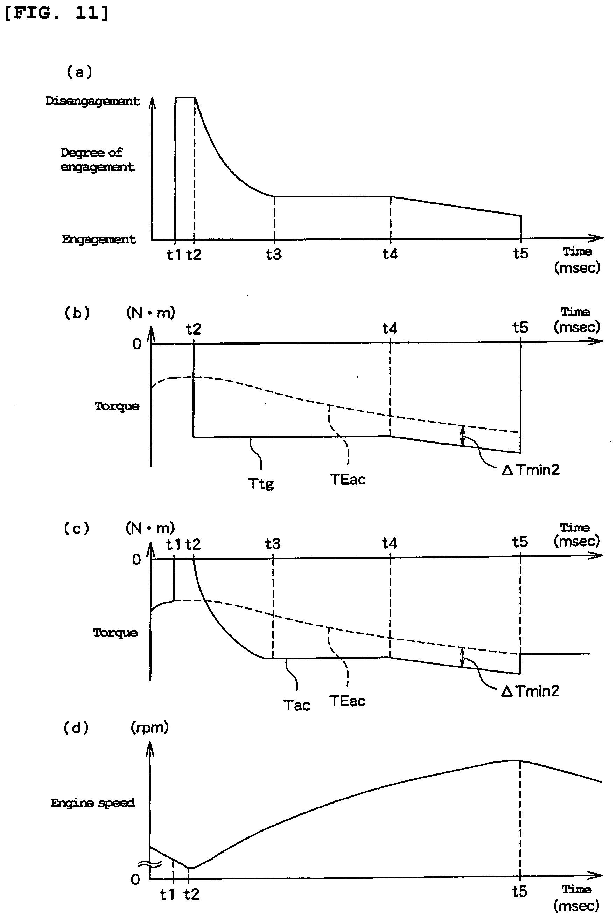

Now, description is made for the shift-down operation with reference to FIGs. 11(a) to 11(d). In the example herein described, the rotational speed of the driven-side member 42 is higher than the rotational speed of the drive-side member 41, and the calculated post-completion transmission torque Tfin is a sufficiently low negative value (the difference between the post-completion transmission torque Tfin and the EG torque TEac is equal to or greater than the correction condition torque difference $\Delta$Tmin2).

At the time t1, when the rider turns the shift-down switch 9b ON, the clutch 40 is switched from the engaged state to the disengaged state, as in the case shown in FIGs. 9(a) to 9(d) (see FIG. 11(a)). Consequently, the actual transmission torque Tac is 0 (see FIG. 11(c)). Then, at the time t2, when some of the shift gears 53a, 53b, 54a, 54b have been already moved, the target transmission torque Ttg is set. As described above, in this example, the difference between the EG torque TEac and the post-completion transmission torque Tfin, which is calculated by the post-completion torque obtaining section 11e, is greater than the correction condition torque difference $\Delta$Tmin2. Thus, the target transmission torque Ttg is set at the post-completion transmission torque Tfin, and no correction processing for the target transmission torque Ttg is therefore performed.

As in the case shown in FIGs. 9(a) to 9(d), after the target transmission torque Ttg is set at the time t2, the clutch actuator 14 is actuated by an amount according to the difference between the target transmission torque Ttg and the actual transmission torque Tac. Thus, as shown in FIGs. 11(a) and 11(b), as the clutch 40 is gradually closer to the engaged state, the actual transmission torque Tac gradually approximates the target transmission torque Ttg. Then, at the time t3, the actual transmission torque Tac reaches the target transmission torque Ttg.

As shown in FIG. 11(c), the actual transmission torque Tac is below the EG torque TEac in the process of its decrease to the target transmission torque Ttg. Thus, as shown in FIG. 11(d), the engine speed starts increasing gradually from the point in time when the actual transmission torque Tac exceeds below the EG torque TEac. Thereby, the clutch rotational speed difference is gradually closer to 0. As described above, generally, the output characteristics of the engine 30 show that the EG torque TEac decreases as the engine speed increases. Thus, as shown in FIG. 11(c), the EG torque TEac decreases as the engine speed increases, and the difference between the EG torque TEac and the actual transmission torque Tac is gradually reduced.

At the time t4, when the difference between the EG torque TEac and the target transmission torque Ttg is smaller than the correction condition torque difference $\Delta$Tmin2, the target transmission torque Ttg, which has been set at the post-completion transmission torque Tfin, is corrected to a value obtained by subtracting the correction condition torque difference $\Delta$Tmin2 from the EG torque TEac (TEac - $\Delta$Tmin2). Consequently, from the time t4 onwards, the clutch 40 is gradually closer to the engaged state such that the actual transmission torque Tac follows the corrected target transmission torque Ttg.

After that, at the time t5, when the clutch rotational speed difference is smaller than the rotational speed difference for discontinuing half-clutch, the clutch 40 is completely engaged, so that the half-clutch state is discontinued (see FIG. 11(a)). Thereby, the engine speed stops increasing, resulting in 0 inertia torque Tlac. Therefore, the actual transmission torque Tac increases by the correction condition torque difference $\Delta$Tmin2 and thus corresponds with the EG torque TEac. As described above, the correction condition torque difference $\Delta$Tmin2 is determined depending on the clutch rotational speed difference. This allows the actual transmission torque Tac to increase by a relatively small amount at the time t5.

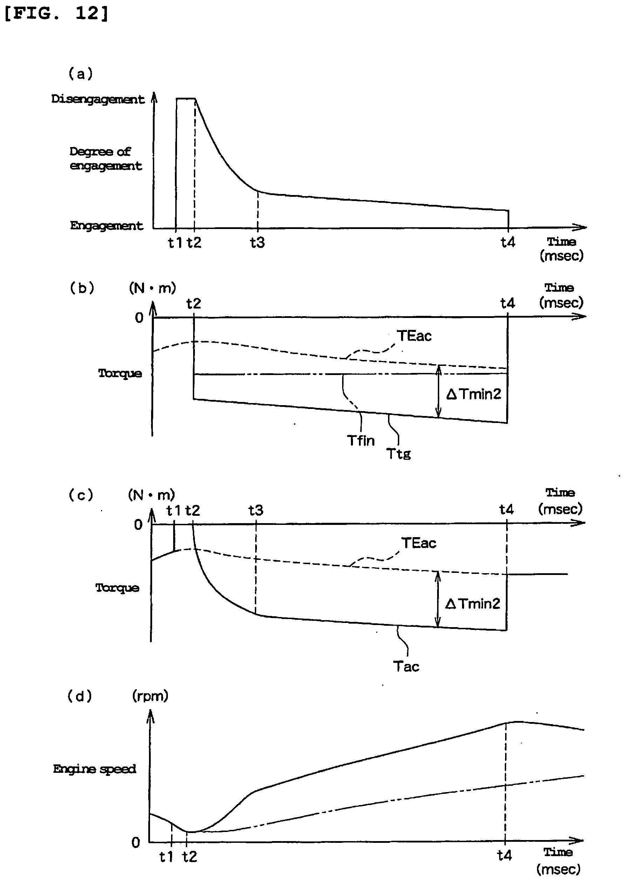

Now, with reference to FIGs. 12(a) to 12(d), description is made of a case where the rotational speed of the driven-side member 42 is higher than the rotational speed of the drive-side member 41, and the difference between the post-completion transmission torque Tfin and the EG torque TEac is smaller than the correction condition torque difference $\Delta$Tmin2.

As in the case shown in FIGs. 11(a) to 11(d), at the time t1, when the rider presses the shift-down switch 9b down, the clutch 40 is switched from the engaged state to the disengaged state (see FIG. 12(a)). Consequently, the actual transmission torque Tac is 0 (see FIG. 12(c)). After that, at the time t2, when some of the shift gears 53a, 53b, 54a, 54b have been already moved, the target transmission torque 11e performs the processing to set the target transmission torque Ttg. As described above, in this example, the difference between the EG torque TEac and the post-completion transmission torque Tfin, which is calculated by the post-completion torque obtaining section 11e, is smaller than the correction condition torque difference ΔTmin2. Thus, the target transmission torque Ttg, which has been set at the post-completion transmission torque Tfin by the post-completion torque obtaining section 11e, is corrected to a value obtained by subtracting the correction condition torque difference ΔTmin2 from the EG torque TEac (TEac - ΔTmin2).

After the target transmission torque Ttg is set at the time t2, engaging operation of the clutch 40 starts. Specifically, as shown in FIGs. 12(a) and 12(b), as a result that the clutch 40 is closer to the engaged state, the actual transmission torque Tac approximates the target transmission torque Ttg. Then, at the time t3, the actual transmission torque Tac reaches the target transmission torque Ttg.

Also in this case, the engine speed starts increasing gradually from the point in time when the actual transmission torque Tac is below the EG torque TEac. Thereby, the difference in rotational speed between the drive-side member 41 and the driven-side member 42 is gradually reduced. Generally, the engine output characteristics show that the EG torque TEac decreases gradually as the engine speed increases. Thus, as shown in FIG. 12(b), the target transmission torque Ttg decreases gradually from the time t2 onwards, and as shown in FIG. 12(c), the actual transmission torque Tac follows this target transmission torque Ttg.

After that, at the time t4, when the clutch rotational speed difference is smaller than the rotational speed difference for discontinuing half-clutch, the clutch 40 is completely engaged, as shown in FIG. 12(a). In addition, as shown in FIGs. 12(c) and 12(d), the engine speed stops increasing, resulting in 0 inertia torque Tlac, and therefore, the actual transmission torque Tac increases by the correction condition torque difference ΔTmin2 and thus corresponds with the EG torque TEac. As described above, the correction condition torque difference ΔTmin2 is determined depending on the clutch rotational speed difference. This allows the actual transmission torque Tac to increase by a smaller amount at the time t4.

The phantom line in FIG. 12(d) shows an example of changes in engine speed with respect to time in the case when no correction processing is performed by the correction processing section 11h. As described above, the correction processing section 11h performs the processing to set the target transmission torque Ttg at a value obtained by subtracting the correction condition torque difference ΔTmin2 from the EG torque TEac. Thus, as shown in FIG. 12(d), the rate at which the engine speed increases is kept higher compared to the case with no correction processing, and the clutch rotational speed difference is thus eliminated earlier.

In the above-mentioned clutch controller 10, the degree of engagement of the clutch 40 is controlled based on the difference between the actual transmission torque Tac, which is transmitted from the drive-side member 41 of the clutch 40 to the driven-side member 42 or the mechanism downstream of the driven-side member 42, and the target transmission torque Ttg, which is supposed to be transmitted. This allows an appropriate amount of torque to be transmitted via the clutch 40. In addition, it is determined whether or not the difference in rotational speed between the drive-side member 41 and the driven-side member 42 is reduced at an appropriate rate. According to the determination result, the target transmission torque Ttg is corrected. This avoids the situation where the clutch rotational speed difference is reduced at an excessively low rate, and therefore, prevents the clutch 40 from spending too much time on the engaging operation.

Further, in the clutch controller 10, the actual torque obtaining section 11a calculates the actual transmission torque Tac based on the EG torque TEac and the inertia torque Tlac produced due to the inertia of the mechanism (such as the crankshaft 34, the piston 32 and the primary speed reducing mechanism 36 in the above description) upstream of the drive-side member 41 in the torque transmission path. The actual transmission torque Tac is thus obtained without providing any specific sensor for outputting a signal according to the actual transmission torque Tac.

Still further, in the clutch controller 10, the post-completion torque obtaining section 11e, included in the target torque obtaining section 11d, sets the target transmission torque Ttg at torque estimated to be transmitted from the drive-side member 41 to the driven-side member 42 or the mechanism downstream of the driven-side member 42 after completion of the engagement of the clutch 40 (hereinbefore the torque is referred to as the post-completion transmission torque Tfin). The correction processing section 11h corrects this target transmission torque Ttg based on the determination result from the appropriateness determining section 11i. This minimizes the changes in actual transmission torque Tac at the time of completely engaging the clutch 40, further improving riding comfort of the vehicle. In addition, the post-completion torque obtaining section 11e sets the target transmission torque Ttg at a value small enough to prevent the clutch rotational speed difference from being reduced at an excessively low rate.

The clutch controller 10 has the EG torque obtaining section 11b for obtaining the torque outputted from the engine 30 as engine torque. The target torque obtaining section 11d corrects the target transmission torque Ttg to increase the difference between the corrected target transmission torque Ttg and the EG torque TEac. This prevents the clutch rotational speed difference from being reduced at a low rate, which can be caused due to the reduced difference between the target transmission torque Ttg and the EG torque TEac.

Further, according to one aspect of the clutch controller 10, the appropriateness determining section 11i determines whether or not the clutch rotational speed difference is reduced at an appropriate rate based on the difference between the target transmission torque Ttg and the EG torque TEac. This allows the target transmission torque Ttg to be corrected before the clutch rotational speed difference is actually reduced at an excessively low rate, thereby more effectively preventing the clutch 40 from spending too much time on its engaging operation.

According to this aspect, the appropriateness determining section 11i compares the difference between the target transmission torque Ttg and the EG torque TEac with a predetermined value (hereinbefore referred to as correction condition torque difference $\Delta$Tmin1, $\Delta$Tmin2). Then, according to the comparison result, the appropriateness determining section 11i determines whether or not the clutch rotational speed difference is reduced at an appropriate rate. This avoids the situation, where the clutch rotational speed difference is reduced at an excessively low rate, by means of the simpler processing than the processing for calculating the rate at which the difference between the EG torque TEac and the target transmission torque Ttg is reduced.

Still further, in the clutch controller 10, the gear shifting engine control section 11L controls the engine 30 such that the EG torque TEac decreases during engaging operation of the clutch 40. This also increases the difference between the EG torque TEac and the actual transmission torque Tac, thereby avoiding the situation where the clutch rotational speed difference is reduced at an excessively low rate.

The description above discloses, in order to solve the foregoing problems, an embodiment of a clutch controller including: an actuator for changing the degree of engagement between a drive-side member and a driven-side member of a clutch; an actual torque obtaining section for obtaining torque transmitted from the drive-side member to a downstream mechanism of a torque transmission path as actual transmission torque, the downstream mechanism including the driven-side member; a target torque obtaining section for obtaining torque that is supposed to be transmitted from the drive-side member to the downstream mechanism as target transmission torque; and a control unit for controlling the degree of engagement of the clutch by actuating the actuator based on a difference between the actual transmission torque and the target transmission torque. The target torque obtaining section includes a determining section for determining whether or not a difference in rotational speed between the drive-side member and the driven-side member is reduced at an appropriate rate, and depending on the determination result, corrects the target transmission torque.

In addition, in order to solve the foregoing problems, the present description is directed to a straddle-type vehicle including such a clutch controller.

Further, in order to solve the foregoing problems, the present description is directed to an embodiment of a method for controlling a clutch, the method including the steps of: obtaining torque transmitted from a drive-side member of the clutch to a downstream mechanism in a torque transmission path as actual transmission torque, the downstream mechanism including a driven-side member of the clutch; obtaining torque that is supposed to be transmitted from the drive-side member to the downstream mechanism as target transmission torque; controlling the degree of engagement of the clutch by actuating an actuator based on a difference between the actual transmission torque and the target transmission torque; determining whether or not a difference in rotational speed between the drive-side member and the driven-side member is reduced at an appropriate rate; and correcting the target transmission torque depending on the determination result from the determining step.

The present teaching allows an appropriate amount of torque to be transmitted via the clutch. The present teaching also prevents the clutch from spending too much time on its engaging operation. More specifically, the rate-of-change of engine speed depends on a difference between torque outputted from an engine (hereinafter referred to as engine torque) and the actual transmission torque transmitted via the clutch. Therefore, setting the target transmission torque at a value close to the engine torque can cause the difference between the actual transmission torque and the engine torque to be small. If this happens, the rate-of-change of engine speed decreases, accordingly, and therefore, the difference in rotational speed between the drive-side member and the driven-side member is reduced at a lower rate. Thus, it takes the clutch too much time for its engaging operation. According to the present teaching, it is determined whether or not the difference in rotational speed between the drive-side member and the driven-side member is reduced at an appropriate rate, and depending on the determination result, the target transmission torque is corrected. This prevents the clutch from spending too much time on its engaging operation. The straddle-type vehicle may be a motorcycle (including a scooter), a four-wheeled buggy or a snowmobile, for example.

The description above further discloses an embodiment of a clutch controller comprising: an actuator for changing the degree of engagement between a drive-side member and a driven-side member of a clutch; an actual torque obtaining section for obtaining torque transmitted from the drive-side member to a downstream mechanism of the torque transmission path as actual transmission torque, the downstream mechanism including the driven-side member; a target torque obtaining section for obtaining torque that is supposed to be transmitted from the drive-side member to the downstream mechanism as target transmission torque; and a control unit for controlling the degree of engagement of the clutch by actuating the actuator based on a difference between the actual transmission torque and the target transmission torque, wherein the target torque obtaining section includes a determining section for determining whether or not a difference in rotational speed between the drive-side member and the driven-side member is reduced at an appropriate rate, and depending on the determination result, corrects the target transmission torque.

Preferably, the actual torque obtaining section calculates the actual transmission torque based on the engine torque and torque produced due to inertia of a mechanism upstream of the drive-side member in the torque transmission path.

Further, preferably the target torque obtaining section sets the target transmission torque at torque estimated to be transmitted from the drive-side member to the downstream mechanism after completion of engagement of the clutch, and depending on the determination result from the determining section, corrects the set target transmission torque.

Further, preferably the clutch controller further comprises an engine torque obtaining section for obtaining torque outputted from an engine as engine torque, wherein the target torque obtaining section corrects the target transmission torque to increase a difference between the corrected target transmission torque and the engine torque.

Further, preferably the determining section determines whether or not the difference in rotational speed between the drive-side member and the driven-side member is reduced at an appropriate rate based on the difference between the target transmission torque and the engine torque.

Further, preferably the determining section compares the difference between the target transmission torque and the engine torque with a predetermined value, and based on the comparison result, determines whether or not the difference in rotational speed between the drive-side member and the driven-side member is reduced at an appropriate rate.

Further, preferably the clutch controller further comprises an engine control section for controlling the engine in order to decrease the engine torque during engaging operation of the clutch.

The description further discloses a straddle-type vehicle comprising the clutch controller according to one of the above embodiments.

The description further discloses a method for controlling a clutch comprising the steps of: obtaining torque transmitted from a drive-side member of the clutch to a downstream mechanism in a torque transmission path as actual transmission torque, the downstream mechanism including a driven-side member of the clutch; obtaining torque that is supposed to be transmitted from the drive-side member to the downstream mechanism as target transmission torque; controlling the degree of engagement of the clutch by actuating an actuator based on a difference between the actual transmission torque and the target transmission torque; determining whether or not a difference in rotational speed between the drive-side member and the driven-side member is reduced at an appropriate rate; and correcting the target transmission torque depending on the determination result from the determining step.

The description above discloses, in particular in order to allow appropriate torque to be transmitted via a clutch, and prevent the clutch from spending too much time on its engaging operation, an embodiment of a clutch controller which controls the degree of engagement of the clutch by actuating a clutch actuator based on a difference between actual transmission torque, which is transmitted from a drive-side member of a clutch to a driven-side member of the clutch, and target transmission torque, which is supposed to be transmitted from the drive-side member to the driven-side member. The clutch controller also determines whether or not a difference in rotational speed between the drive-side member and the driven-side member of the clutch is reduced at an appropriate rate, and depending on the determination result, corrects the target transmission torque.

**Claims**

1. Vehicle having an engine and a clutch (40) provided in a torque transmission path, a clutch controller (10) comprising:

   an actuator (14) for changing the degree of engagement between a drive-side member (41) and a driven-side member (42) of the clutch (40);
   an actual torque obtaining section (11a) for obtaining torque transmitted from the drive-side member (41) to a downstream mechanism of the torque transmission path as actual transmission torque (Tac), the downstream mechanism including the driven-side member (42);
   a target torque obtaining section (11d) for obtaining torque that is supposed to be transmitted from the drive-side member (41) to the downstream mechanism as target transmission torque (Ttg); and
   a control unit (11), said control unit (11) being configured to control the degree of engagement of the clutch (40) by actuating the actuator (14) based on a difference between the actual transmission torque (Tac) and the target transmission torque (Ttg), **characterised in that** the target torque obtaining section (11d) includes a determining section (11i) configured to determine whether or not a difference in rotational speed between the drive-side member (41) and the driven-side member (42) is reduced at an appropriate rate, and depending on the determination result, to correct the target transmission torque (Ttg).

2. Vehicle according to claim 1, wherein the actual torque obtaining section (11a) is configured to calculate the actual transmission torque (Tac) based on the engine torque (TEac) and torque (Tlac) produced due to inertia of a mechanism upstream of the drive-side member (41) in the torque transmission path.

3. Vehicle according to claim 1 or 2, wherein the target torque obtaining section (11d) is configured to set the target transmission torque (Ttg) at torque estimated to be transmitted from the drive-side member (41) to the downstream mechanism after completion of engagement of the clutch (40), and depending on the determination result from the determining section (11i), to correct the set target transmission torque.

4. Vehicle according to one of the claims 1 to 3, further comprising an engine torque obtaining section (11b) for obtaining torque outputted from an engine (30) as engine torque, wherein the target torque obtaining section (11d) is configured to correct the target transmission torque to increase a difference between the corrected target transmission torque and the engine torque.

5. Vehicle according to claim 4, wherein the determining section (11i) is configured to determine whether or not the difference in rotational speed between the drive-side member (41) and the driven-side member (42) is reduced at an appropriate rate based on the difference between the target transmission torque and the engine torque.

6. Vehicle according to claim 4, wherein the determining section (11i) is configured to compare the difference between the target transmission torque and the engine torque with a predetermined value, and based on the comparison result, to determine whether or not the difference in rotational speed between the drive-side member (41) and the driven-side member (42) is reduced at an appropriate rate.

7. Vehicle according to one of the claims 1 to 6, further comprising an engine control section for controlling the engine (30) in order to decrease the engine torque during engaging operation of the clutch (40).

8. Vehicle according to one of the claims 1 to 7, wherein the control unit (11) is configured to set the target transmission torque, while actuating the clutch controller (10), such that the actual transmission torque approximates the target transmission torque.

9. Method for controlling a clutch (40) in a torque transmitting path of a vehicle, comprising the steps of:

   obtaining torque transmitted from a drive-side member (41) of the clutch (40) to a downstream mechanism in a torque transmission path as actual transmission torque, the downstream mechanism including a driven-side member (42) of the clutch (40);
   obtaining torque that is supposed to be transmitted from the drive-side member (41) to the downstream mechanism as target transmission torque; and controlling the degree of engagement of the clutch (40) by actuating an actuator (14) based on a difference between the actual transmission torque and the target transmission torque; determining whether or not a difference in rotational speed between the drive-side member (41) and the driven-side member (42) is reduced at an appropriate rate, and correcting the target transmission torque depending on the determination result from the determining step.

**Patentansprüche**

1. Ein Fahrzeug, das einen Motor und eine Kupplung (40) hat, die in einem Moment-Übertragungs-Pfad vorgesehen sind, eine Kupplungs-Steuerung (10) umfasst:

   einen Aktuator (14), zur Änderung des Grades des Eingriffs zwischen einem Antriebs-Seiten-Element (41) und einem Angetriebenen-Seiten-Element (42) der Kupplung;
   einen Aktuelles-Moment-Erhaltungsabschnitt (11a), zum Erhalten eines Moments, übertragen von dem Antriebs-Seiten-Element (41) zu einem Strom-Ab-Mechanismus des Moment-Übertragungs-Pfades als ein aktuelles Übertragungsmoment (Tac), der Strom-Ab-Mechanismus beinhaltet das Angetriebenen-Seiten-Element (42);
   einen Ziel-Moment-Erhaltungsabschnitt (11d), zum Erhalten eines Moments das erwartet wird, um von dem Antriebs-Seiten-Element (41) zu dem Strom-Ab-Mechanismus übertragen zu werden, als ein Ziel-Übertragungsmoment (Ttg); und

eine Steuer-Einheit (11), diese Steuer-Einheit (11) ist konfiguriert um den Grad des Eingriffs der Kupplung (14), durch Betätigen des Aktuators (14), auf Grundlage einer Differenz zwischen dem aktuellen Übertragungsmoment (Tac) und dem Ziel-Übertragungsmoment (Ttg) zu steuern, **dadurch gekennzeichnet, dass** der Ziel-Moment-Erhaltungsabschnitt (11d) einen Bestimmungsabschnitt (11i) beinhaltet, der konfiguriert ist, um zu bestimmen ob oder nicht eine Differenz in der Drehzahl zwischen dem Antriebs-Seiten-Element (41) und dem Angetriebenen-Seiten-Element (42) reduziert ist, durch eine geeignete Rate, und um entsprechend dem Bestimmungs-Ergebnis das Ziel-Übertragungsmoment (Ttg) zu korrigieren.

2. Fahrzeug gemäß Anspruch 1, wobei der Aktuelles-Moment-Erhaltungsabschnitt (11a) konfiguriert ist das aktuelle Übertragungsmoment (Tac) zu berechnen, auf Grundlage des Motor-Moments (TEac) und eines Moments (Tlac), erzeugt durch die Trägheit eines Mechanismus, strom-auf von dem Antriebs-Seiten-Element (41) in dem Moment-Übertragungs-Pfad.

3. Fahrzeug gemäß Anspruch 1 oder 2, wobei der Ziel-Moment-Erhaltungsabschnitt (11d) konfiguriert ist, um das Ziel-Übertragungsmoment (Ttg) auf ein Moment zu setzen, das abgeschätzt ist, um von dem Antriebs-Seiten-Element (41) zu dem Strom-Ab-Mechanismus übertragen zu werden, nach der Vervollständigung des Eingriffs der Kupplung (40), und abhängig von dem Bestimmungs-Ergebnis von dem Bestimmungsabschnitt (11i) das gesetzte Ziel-Übertragungsmoment zu korrigieren.

4. Fahrzeug gemäß einem der Ansprüche 1 bis 3, das weitere umfasst einen Motor-Moment-Erhaltungsabschnitt (11b), um ein Moment, ausgegebenen von dem Motor (30), als ein Motor-Moment zu erhalten, wobei der Ziel-Moment-Erhaltungsabschnitt (11d) konfiguriert ist das Ziel-Übertragungsmoment zu korrigieren, um eine Differenz zwischen dem korrigierten Ziel-Übertragungsmoment und dem Motor-Moment zu erhöhen.

5. Fahrzeug gemäß Anspruch 4, wobei der Bestimmungsabschnitt (11i) konfiguriert ist, um zu bestimmen ob oder ob nicht die Differenz in der Drehzahl zwischen dem Antriebs-Seiten-Element (41) und dem Angetriebenen-Seiten-Element (42) mit einer geeigneten Rate reduziert ist, auf Grundlage der Differenz zwischen dem Ziel-Übertragungsmoment und dem Motor-Moment.

6. Fahrzeug gemäß Anspruch 4, wobei der Bestimmungsabschnitt (11i) konfiguriert ist, um die Differenz zwischen dem Ziel-Übertragungsmoment und dem Motor-Moment mit einem vorbegebenen Wert zu vergleichen, und auf Grundlage des Vergleichs-Ergebnisses zu bestimmen ob oder ob nicht die Differenz in der Drehzahl zwischen dem Antriebs-Seiten-Element (41) und dem Angetriebenen-Seiten-Element (42) in einer geeigneten Rate reduziert ist.

7. Fahrzeug gemäß einem der Ansprüche 1 bis 6, das weiter umfasst einen Motor-Steuerabschnitt, zur Steuerung des Motors (30), um das Motor-Moment während des Eingriffsbetriebs der Kupplung (40) zu reduzieren.

8. Fahrzeug gemäß einem der Ansprüche 1 bis 7, wobei die Steuer-Einheit (11) konfiguriert ist, um das Ziel-Übertragungsmoment zu setzen während der Betätigung der Kupplungs-Steuerung (10), so dass das aktuelle Übertragungsmoment das Ziel-Übertragungsmoment erreicht.

9. Ein Verfahren zur Steuerung einer Kupplung (40) in einem Moment-Übertragungs-Pfad, umfasst die Schritte:

Erhalten eines Moments, übertragen von einem Antriebs-Seiten-Element (41) der Kupplung zu einem Strom-Ab-Mechanismus in einem Moment-Übertragungs-Pfad als ein aktuelles Übertragungsmoment (Tac), der Strom-Ab-Mechanismus beinhaltet ein Angetriebenen-Seiten-Element (42) der Kupplung (40);
Erhalten eines Moments das erwartet wird, um von dem Antriebs-Seiten-Element (41) zu dem Strom-Ab-Mechanismus übertragen zu werden, als ein Ziel-Übertragungsmoment (Ttg); und
Steuern den Grad des Eingriffs der Kupplung (14), durch Betätigen eines Aktuators (14), auf Grundlage einer Differenz zwischen dem aktuellen Übertragungsmoment (Tac) und dem Ziel-Übertragungsmoment (Ttg);
Bestimmen ob oder nicht eine Differenz in der Drehzahl zwischen dem Antriebs-Seiten-Element (41) und dem Angetriebenen-Seiten-Element (42) reduziert ist, durch eine geeignete Rate, und Korrigieren des Ziel-Übertragungsmoment (Ttg) entsprechend dem Bestimmungs-Ergebnis von dem Bestimmungs-Schritt.

**Revendications**

1. Véhicule ayant un moteur et un embrayage (40) prévus dans un trajet de transmission de couple, une commande d'embrayage (10) comprenant :

   un actionneur (14) pour changer le degré d'engagement entre un élément côté entraînement (41) et un élément côté entraîné (42) de l'embrayage (40) ;
   une section d'obtention de couple réel (11a) pour obtenir un couple transmis depuis l'élément côté entraînement (41) vers un mécanisme en aval du trajet de transmission de couple en tant que couple de transmission réel (Tac), le mécanisme en aval incluant l'élément côté entraîné (42) ;
   une section d'obtention de couple cible (11d) pour obtenir un couple qui est censé être transmis de l'élément côté entraînement (41) au mécanisme en aval en tant que couple de transmission cible (Ttg) ; et
   une unité de commande (11), ladite unité de commande (11) étant configurée pour commander le degré d'engagement de l'embrayage (40) en actionnant l'actionneur (14) sur la base d'une différence entre le couple de transmission réel (Tac) et le couple transmission cible (Ttg), **caractérisé en ce que**
   la section d'obtention de couple cible (11d) comprend une section de détermination (111) configurée pour déterminer si une différence de vitesse de rotation entre l'élément côté entraînement (41) et l'élément côté entraîné (42) est réduite ou non à un taux approprié et, en fonction du résultat de la détermination, corriger le couple de transmission cible (Ttg).

2. Véhicule selon la revendication 1, dans lequel la section d'obtention de couple réel (11a) est configurée pour calculer le couple de transmission réel (Tac) sur la base du couple moteur (TEac) et du couple (Tlac) produit en raison de l'inertie d'un mécanisme en amont de l'élément côté entraînement (41) dans le trajet de transmission de couple.

3. Véhicule selon la revendication 1 ou 2, dans lequel la section d'obtention de couple cible (11d) est configurée pour régler le couple de transmission cible (Ttg) au couple estimé devant être transmis de l'élément côté entraînement (41) au mécanisme en aval après achèvement de l'engagement de l'embrayage (40), et, en fonction du résultat de détermination de la section de détermination (11i), pour corriger le couple de transmission cible réglé.

4. Véhicule selon l'une des revendications 1 à 3, comprenant en outre une section d'obtention de couple moteur (11b) pour obtenir le couple délivré en sortie par un moteur (30) en tant que couple moteur, dans lequel la section d'obtention de couple cible (11d) est configurée pour corriger le couple de transmission cible afin d'augmenter une différence entre le couple de transmission cible corrigé et le couple moteur.

5. Véhicule selon la revendication 4, dans lequel la section de détermination (11i) est configurée pour déterminer si la différence de vitesse de rotation entre l'élément de côté entraînement (41) et l'élément côté entraîné (42) est réduite ou non à un taux approprié sur la base de la différence entre le couple de transmission cible et le couple moteur.

6. Véhicule selon la revendication 4, dans lequel la section de détermination (11i) est configurée pour comparer la différence entre le couple de transmission cible et le couple moteur avec une valeur prédéterminée, et sur la base du résultat de la comparaison, pour déterminer si la différence de vitesse de rotation entre l'élément côté entraînement (41) et l'élément côté entraîné (42) est réduite ou non à un taux approprié.

7. Véhicule selon l'une des revendications 1 à 6, comprenant en outre une section de commande du moteur pour commander le moteur (30) afin de diminuer le couple moteur pendant l'opération d'engagement de l'embrayage (40).

8. Véhicule selon l'une des revendications 1 à 7, dans lequel l'unité de commande (11) est configurée pour régler le couple de transmission cible, tout en actionnant la commande d'embrayage (10), de sorte que le couple de transmission réel se rapproche du couple de transmission cible.

9. Procédé pour commander un embrayage (40) dans un trajet de transmission de couple d'un véhicule, comprenant les étapes consistant à :

   obtenir un couple transmis depuis un élément côté entraînement (41) de l'embrayage (40) à un mécanisme en aval dans un trajet de transmission de couple en tant que couple de transmission réel, le mécanisme en aval comprenant un élément côté entraîné (42) de l'embrayage (40) ;
   obtenir un couple qui est censé être transmis de l'élément côté entraînement (41) au mécanisme en aval en tant que couple de transmission cible ; et

commander le degré d'engagement de l'embrayage (40) en actionnant un actionneur (14) sur la base d'une différence entre le couple de transmission réel et le couple de transmission cible ;

déterminer si une différence de vitesse de rotation entre l'élément côté entraînement (41) et l'élément côté entraîné (42) est réduite ou non à un taux approprié, et corriger le couple de transmission cible en fonction du résultat de détermination de l'étape de détermination.

[FIG. 1]

[FIG. 2]

[FIG. 3]

[FIG. 4]

(a)

(b)

(c)

(d)

[FIG. 5]

11

| Actual torque obtaining section | 11a |

| EG torque obtaining section | 11b |

| Inertia torque obtaining section | 11c |

| Target torque obtaining section | 11d |

| Post-completion torque obtaining section | 11e |

| Post-completion EG torque obtaining section | 11f |

| Post-completion inertia torque obtaining section | 11g |

| Correction processing section | 11h |

| Appropriateness determining section | 11i |

| Clutch actuator control section | 11J |

| Shift actuator control section | 11k |

| Gear shifting engine control section | 11L |

[FIG. 6]

[FIG. 7]

[FIG. 8]

```
                    ┌──────────────┐
                    │    Start     │
                    └──────┬───────┘
                           ↓
                  ┌──────────────────┐
                  │ Disengage clutch.│───── S101
                  └────────┬─────────┘
                           ↓
                  ╱────────────────────╲        No
                 ⟨  Whether shift-up     ⟩──────────┐
                  ╲ command is inputted? ╱           │
                   ╲──────────┬─────────╱  S102      │
                         ↓ Yes                       │
                  ┌──────────────────┐               │
                  │ Perform retarding│───── S103     │
                  │ control.         │               │
                  └────────┬─────────┘               │
                           ↓←──────────────────────────┘
                  ┌──────────────────┐
                  │ Move shift gear. │───── S104
                  └────────┬─────────┘
                           ↓
                  ┌──────────────────────┐
                  │ Obtain EG torque TEac.│
                  │ Obtain inertia torque │───── S105
                  │ TIac. Calculate actual│
                  │ transmission torque Tac.│
                  └────────┬─────────────┘
                           ↓
                  ┌──────────────────────┐
                  │ Calculate post-completion│
                  │ transmission torque Tfin.│───── S106
                  │ Tfin → Target transmission│
                  │ torque Ttg            │
                  └────────┬─────────────┘
            S107           ↓
                  ╱──────────────────────╲    No                    S111
                 ⟨ Rotational speed of     ⟩──────────────┐
                  ╲ drive-side member >     ╱              ↓
                  ╲ Rotational speed of    ╱    ╱──────────────────╲  No
                   ╲driven-side member?   ╱    ⟨   TEac − Ttg        ⟩────┐
            S108        ↓ Yes                   ╲  < ΔTmin2 ?        ╱    │
                  ╱──────────────────────╲ No    ╲────────┬────────╱ S112│
                 ⟨ Ttg − TEac < ΔTmin1 ? ⟩──┐          ↓ Yes            │
                  ╲──────────┬───────────╱   │    ┌──────────────────┐   │
            S109        ↓ Yes              │    │ Ttg ← TEac − ΔTmin2│   │
                  ┌──────────────────┐      │    └────────┬─────────┘   │
            S110  │ Ttg ← TEac + ΔTmin1│    │             ↓←─────────────┘
                  └────────┬─────────┘      │    ┌──────────────────┐
                           ↓←───────────────┘    │ Calculate command│
                  ┌──────────────────────┐       │ actuation amount │
                  │ Calculate command     │       │ based on torque  │
                  │ actuation amount based│       │ deviation        │
                  │ on torque deviation   │       │ (Ttg − Tac).     │
                  │ (Ttg − Tac)           │       └────────┬─────────┘
                  └────────┬─────────────┘            S113
                           ↓←────────────────────────────┘
                  ┌──────────────────────┐
                  │ Output control signal │───── S114
                  │ according to command  │
                  │ actuation amount.     │
                  └────────┬─────────────┘
                           ↓
         No       ╱──────────────────────╲
        ┌────────⟨ Clutch rotational speed ⟩───── S115
        │         ╲ difference < Rotational ╱
        │         ╲ speed difference for    ╱
        │          ╲discontinuing half-clutch?╱
        │               ↓ Yes
        │         ┌──────────────────────┐
        │         │ Engage drive-side     │───── S116
        │         │ member with driven-side│
        │         │ member completely.    │
        │         └────────┬─────────────┘
        │                  ↓
        │         ┌──────────────┐
        │         │     End      │
        │         └──────────────┘
        └──────────────(back to S105)
```

[FIG. 9]

[FIG. 10]

(a)

(b)    (N·m)

(c)    (N·m)

(d)    (rpm)

[FIG. 11]

(a)

(b)

(c)

(d)

[FIG. 12]

(a)

Disengagement

Degree of engagement

Engagement

t1 t2    t3    t4    Time (msec)

(b)    (N·m)    Time (msec)

0    t2    t4

TEac

Torque

ΔTmin2

Tfin    Ttg

(c)    (N·m)    Time (msec)

0    t1 t2    t3    t4

TEac

Torque

ΔTmin2

Tac

(d)    (rpm)

Engine speed

0    t1 t2    t4    Time (msec)

**EP 1 975 444 B1**

## REFERENCES CITED IN THE DESCRIPTION

### Patent documents cited in the description

- JP 2001146930 A
- DE 102005030534 A1